# EUROPEAN PATENT APPLICATION

(11) **EP 4 852 411 A1**
(43) Date of publication of application: **09.12.2026**
(21) Application number: 25774711.3
(22) Date of filing: 24.01.2025
(51) Int. Cl.: H04L 67/51, H04W 8/00, H04L 67/303, H04W 8/24, H04L 41/0803, H04W 4/80

(54) **ELECTRONIC DEVICE, METHOD, AND NON-TRANSITORY COMPUTER-READABLE RECORDING MEDIUM FOR SHARING HARDWARE RESOURCES**

(30) Priority: 20.03.2024 KR 20240038255; 27.03.2024 KR 20240042075
(71) Applicant: Samsung Electronics Co., Ltd., Suwon-si, Gyeonggi-do 16677 (KR)
(72) Inventor: LEE, Sangsoo, Suwon-si, Gyeonggi-do 16677 (KR); KIM, Moonsoo, Suwon-si, Gyeonggi-do 16677 (KR); KIM, Jinwon, Suwon-si, Gyeonggi-do 16677 (KR); SIM, Junyong, Suwon-si, Gyeonggi-do 16677 (KR); LEE, Dooho, Suwon-si, Gyeonggi-do 16677 (KR); LEE, Junwoo, Suwon-si, Gyeonggi-do 16677 (KR)
(74) Representative: HGF
(86) International application number: PCT/KR2025/099144
(87) International publication number: WO 2025/198401

(57) **Abstract**

An electronic device is disclosed. The electronic device may comprise a communication circuit for Bluetooth low energy (BLE). The electronic device may comprise at least one processor including a processing circuit. The electronic device may comprise a memory which stores instructions and includes one or more storage media. The electronic device may receive, from another electronic device through the communication circuit, an advertisement packet for sharing a hardware component of the other electronic device. The electronic device may enable a driver for accessing the hardware component indicated by the advertisement packet, on the basis of the advertisement packet being received while the sharing of the hardware component of the electronic device is enabled. The electronic device may maintain the driver in a disabled state on the basis of the advertisement packet being received while the sharing is disabled.

## Description

### [Technical Field]

The following descriptions relate to an electronic device, a method, and a non-transitory computer readable storage medium for sharing a hardware resource.

### [Background Art]

As IT technology develops, use of small electronic devices is increasing. The small electronic devices may include devices such as a smart phone, a tablet PC, a portable multimedia player (PMP), a laptop personal computer (laptop PC), and a wearable device. As the use of the small electronic devices increases, a situation in which a plurality of small electronic devices are used within the same space is occurring, and demand for a continuous and unified user experience through the plurality of small electronic devices within the same space is also increasing.

### [Disclosure]

### [Technical Solution]

An electronic device is disclosed. The electronic device may comprise communication circuitry for Bluetooth low energy (BLE). The electronic device may comprise at least one processor comprising processing circuitry. The electronic device may comprise memory, comprising one or more storage mediums, storing instructions. The instructions, when executed by the at least one processor individually or collectively, may cause the electronic device to receive, via the communication circuitry, from another electronic device, an advertising packet for sharing a hardware component of the another electronic device. The instructions, when executed by the at least one processor individually or collectively, may cause the electronic device to, based on the advertising packet being received while the sharing of the hardware component of the electronic device is activated, activate a driver for access to the hardware component indicated by the advertising packet. The instructions, when executed by the at least one processor individually or collectively, may cause the electronic device to, based on the advertising packet being received while the sharing is deactivated, maintain the driver in a deactivated state.

An electronic device is disclosed. The electronic device may comprise communication circuitry for Bluetooth low energy (BLE). The electronic device may comprise at least one processor comprising processing circuitry. The electronic device may comprise memory, comprising one or more storage mediums, storing instructions. The instructions, when executed by the at least one processor individually or collectively, may cause the electronic device to broadcast, via the communication circuitry, to another electronic device, an advertising packet for sharing a hardware component of the electronic device. The instructions, when executed by the at least one processor individually or collectively, may cause the electronic device to obtain, via the communication circuitry, from the another electronic device, an access request for the hardware component indicated by the advertising packet. The instructions, when executed by the at least one processor individually or collectively, may cause the electronic device to, based on the access request being obtained, connect server processes related to the hardware component with client processes related to the hardware component and executed in the another electronic device. The instructions, when executed by the at least one processor individually or collectively, may cause the electronic device to transmit, via the communication circuitry, to the another electronic device, a signal indicating that the server processes are connected to the client processes executed in the another electronic device.

A method is disclosed. The method may be performed in an electronic device comprising communication circuitry for BLE. The method may comprise receiving, via the communication circuitry, from another electronic device, an advertising packet for sharing a hardware component of the another electronic device. The method may comprise, based on the advertising packet being received while the sharing of the hardware component of the electronic device is activated, activating a driver for access to the hardware component indicated by the advertising packet. The method may comprise, based on the advertising packet being received while the sharing is deactivated, maintaining the driver in a deactivated state.

A method is disclosed. The method may be performed in an electronic device comprising communication circuitry for BLE. The method may comprise broadcasting, via the communication circuitry, to another electronic device, an advertising packet for sharing a hardware component of the electronic device. The method may comprise obtaining, via the communication circuitry, from the another electronic device, an access request for the hardware component indicated by the advertising packet. The method may comprise, based on the access request being obtained, connecting server processes related to the hardware component with client processes related to the hardware component and executed in the another electronic device. The method may comprise transmitting, via the communication circuitry, to the another electronic device, a signal indicating that the server processes are connected to the client processes executed in the another electronic device.

A non-transitory computer readable storage medium is disclosed. The non-transitory computer readable storage medium may store a program comprising instructions. The instructions, when executed by at least one processor of an electronic device comprising communication circuitry for Bluetooth low energy (BLE), individually or collectively, may cause the electronic device to receive, via the communication circuitry, from another electronic device, an advertising packet for sharing a hardware component of the another electronic device. The instructions, when executed by the at least one processor individually or collectively, may cause the electronic device to, based on the advertising packet being received while the sharing of the hardware component of the electronic device is activated, activate a driver for access to the hardware component indicated by the advertising packet. The instructions, when executed by the at least one processor individually or collectively, may cause the electronic device to, based on the advertising packet being received while the sharing is deactivated, maintain the driver in a deactivated state.

A non-transitory computer readable storage medium is disclosed. The non-transitory computer readable storage medium may store a program comprising instructions. The instructions, when executed by at least one processor of an electronic device comprising communication circuitry for Bluetooth low energy (BLE), individually or collectively, may cause the electronic device to broadcast, via the communication circuitry, to another electronic device, an advertising packet for sharing a hardware component of the electronic device. The instructions, when executed by the at least one processor individually or collectively, may cause the electronic device to obtain, via the communication circuitry, from the another electronic device, an access request for the hardware component indicated by the advertising packet. The instructions, when executed by the at least one processor individually or collectively, may cause the electronic device to, based on the access request being obtained, connect server processes related to the hardware component with client processes related to the hardware component and executed in the another electronic device. The instructions, when executed by the at least one processor individually or collectively, may cause the electronic device to transmit, via the communication circuitry, to the another electronic device, a signal indicating that the server processes are connected to the client processes executed in the another electronic device.

### [Description of the Drawings]

FIG. 1 is a block diagram of an electronic device in a network environment according to various embodiments.
FIG. 2 is a block diagram illustrating a program according to various embodiments.
FIG. 3 illustrates an example of a wireless environment including an electronic device according to an embodiment.
FIG. 4A is a diagram illustrating an example of a screen displayed in another electronic device according to an embodiment.
FIG. 4B is a diagram illustrating an example of a screen displayed in another electronic device according to an embodiment.
FIG. 5A is a diagram illustrating an example of a screen displayed in an electronic device according to an embodiment.
FIG. 5B is a diagram illustrating an example of a screen displayed in an electronic device according to an embodiment.
FIG. 6A is a diagram illustrating operations for advertising and scanning between electronic devices according to an embodiment.
FIG. 6B is a diagram illustrating operations of broadcasting an advertising packet in electronic devices according to an embodiment.
FIG. 6C is a diagram illustrating operations of scanning an advertising packet in an electronic device according to an embodiment.
FIG. 7A is a diagram illustrating operations for sharing a hardware resource between electronic devices according to an embodiment.
FIG. 7B is a diagram illustrating operations for setting capability information of a hardware component between electronic devices according to an embodiment.
FIG. 8A is a diagram illustrating an example of a screen displayed during sharing of a hardware resource in another electronic device according to an embodiment.
FIG. 8B is a diagram illustrating an example of a screen displayed during sharing of a hardware resource in an electronic device according to an embodiment.
FIG. 9 is a diagram illustrating an example of a program architecture of electronic devices according to an embodiment.
FIG. 10A is a diagram illustrating operations in which another electronic device requests initialization of a resource context according to an embodiment.
FIG. 10B is a diagram illustrating operations in which another electronic device requests an update of a resource context according to an embodiment.
FIG. 10C is a diagram illustrating operations in which an electronic device updates a resource context according to an embodiment.
FIG. 10D is a diagram illustrating operations in which an electronic device requests a resource for updating a resource context according to an embodiment.
FIG. 10E is a diagram illustrating operations in which an electronic device requests a resource for updating a resource context according to an embodiment.
FIG. 11 is a diagram illustrating an example of a relationship between processes of electronic devices according to an embodiment.
FIG. 12 is a flowchart illustrating an operation of an electronic device according to an embodiment.
FIG. 13 is a diagram illustrating an example of different orientations and/or aspect ratios of electronic devices according to an embodiment.
FIG. 14A is a flowchart illustrating an operation of an electronic device according to an embodiment.
FIG. 14B is a flowchart illustrating an operation of an electronic device according to an embodiment.
FIG. 15A is a diagram illustrating operations in which an electronic device processes an image according to an embodiment.
FIG. 15B is a diagram illustrating operations in which an electronic device processes an image according to an embodiment.

### [Mode for Invention]

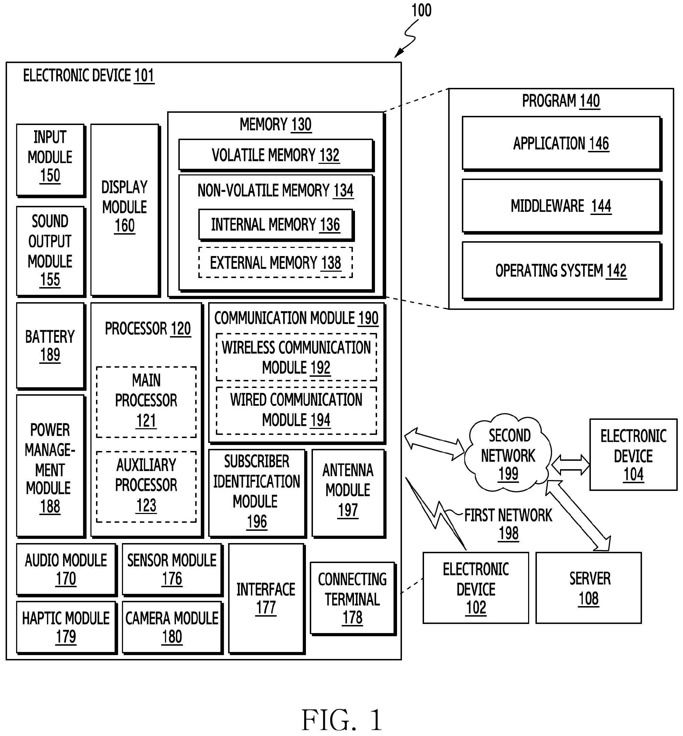

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 664dB or less) for implementing mMTC, or U-plane latency (e.g., 0.5ms or less for each of downlink (DL) and uplink (UL), or a round trip of 6ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

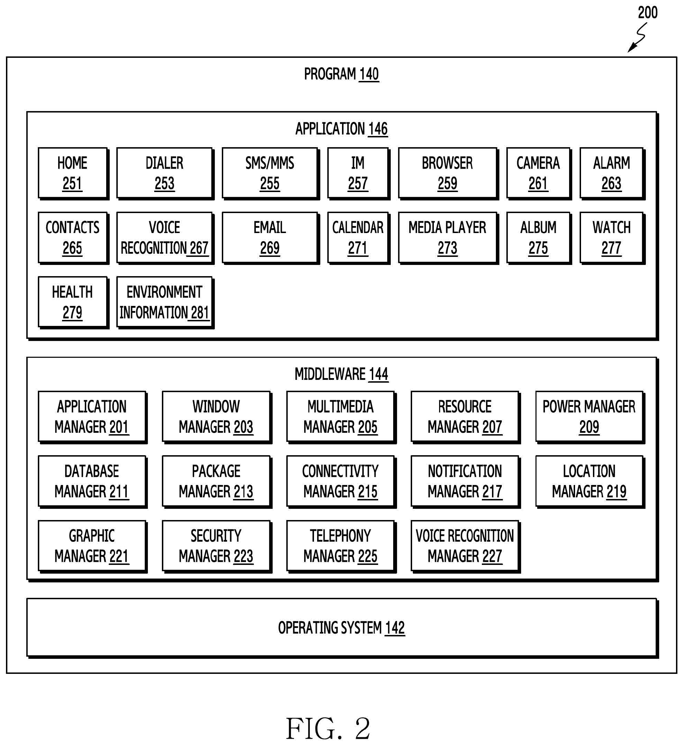

FIG. 2 is a block diagram 200 illustrating a program 140 according to various embodiments. According to an embodiment, the program 140 may include an operating system 142, middleware 144, or an application 146 executable in the operating system 142, for controlling one or more resources of an electronic device 101. The operating system 142 may include, for example, Android^{™}, iOS^{™}, Windows^{™}, Symbian^{™}, Tizen^{™}, or Bada^{™}. At least some programs among the program 140 may be, for example, preloaded into the electronic device 101 at the time of manufacture, or downloaded or updated from an external electronic device (e.g., an electronic device 102 or 104, or a server 108) during use by a user.

The operating system 142 may control management (e.g., allocation or reclamation) of one or more system resources (e.g., a process, memory, or power) of the electronic device 101. The operating system 142 may, additionally or alternatively, include one or more driver programs for driving another hardware device of the electronic device 101, for example, an input module 150, a sound output module 155, a display module 160, an audio module 170, a sensor module 176, an interface 177, a haptic module 179, a camera module 180, a power management module 188, a battery 189, a communication module 190, a subscriber identification module 196, or an antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201 may, for example, manage a life cycle of the application 146. The window manager 203 may, for example, manage one or more GUI resources used on a screen. The multimedia manager 205 may, for example, identify one or more formats required for playback of media files, and may perform encoding or decoding of a corresponding media file among the media files by using a codec corresponding to the selected format among the one or more formats. The resource manager 207 may, for example, manage a source code of the application 146 or a memory space of the memory 130. The power manager 209 may, for example, manage a capacity, a temperature, or power of the battery 189, and by using corresponding information among these, may determine or provide related information necessary for an operation of the electronic device 101. According to an embodiment, the power manager 209 may be linked with a basic input/output system (BIOS) (not illustrated) of the electronic device 101.

The database manager 211 may, for example, generate, search, or modify a database to be used by the application 146. The package manager 213 may, for example, manage installation or update of an application distributed in a form of a package file. The connectivity manager 215 may, for example, manage a wireless connection or a direct connection between the electronic device 101 and the external electronic device. The notification manager 217 may, for example, provide a function for notifying the user of occurrence of a designated event (e.g., an incoming call, a message, or an alarm). The location manager 219 may, for example, manage location information of the electronic device 101. The graphic manager 221 may, for example, manage one or more graphic effects to be provided to the user or a user interface related thereto.

The security manager 223 may, for example, provide system security or user authentication. The telephony manager 225 may, for example, manage a voice call function or a video call function provided by the electronic device 101. The voice recognition manager 227 may, for example, transmit voice data of the user to the server 108, and may receive, from the server 108, a command corresponding to a function to be performed in the electronic device 101 based at least in part on the voice data, or character data converted based at least in part on the voice data. According to an embodiment, the middleware 144 may dynamically delete some of existing components or add new components. According to an embodiment, at least a portion of the middleware 144 may be included as a portion of the operating system 142, or may be implemented as separate software different from the operating system 142.

The application 146 may include, for example, a home application 251, a dialer application 253, an SMS/MMS application 255, an instant message (IM) application 257, a browser application 259, a camera application 261, an alarm application 263, a contacts application 265, a voice recognition application 267, an email application 269, a calendar application 271, a media player application 273, an album application 275, a watch application 277, a health application 279 (e.g., measuring biometric information such as an amount of exercise or blood sugar), or an environment information application 281 (e.g., measuring atmospheric pressure, humidity, or temperature information). According to an embodiment, the application 146 may further include an information exchange application (not illustrated) capable of supporting information exchange between the electronic device 101 and the external electronic device. The information exchange application may include, for example, a notification relay application configured to transmit designated information (e.g., a call, a message, or an alarm) to the external electronic device, or a device management application configured to manage the external electronic device. The notification relay application may, for example, transmit, to the external electronic device, notification information corresponding to a designated event (e.g., receipt of mail) occurring in another application (e.g., the email application 269) of the electronic device 101. Additionally or alternatively, the notification relay application may receive notification information from the external electronic device and provide it to the user of the electronic device 101.

The device management application may, for example, control power (e.g., turn-on or turn-off) or a function (e.g., brightness, resolution, or focus) of the external electronic device communicating with the electronic device 101 or of some components thereof (e.g., a display module or a camera module of the external electronic device). The device management application may, additionally or alternatively, support installation, deletion, or update of an application operating in the external electronic device.

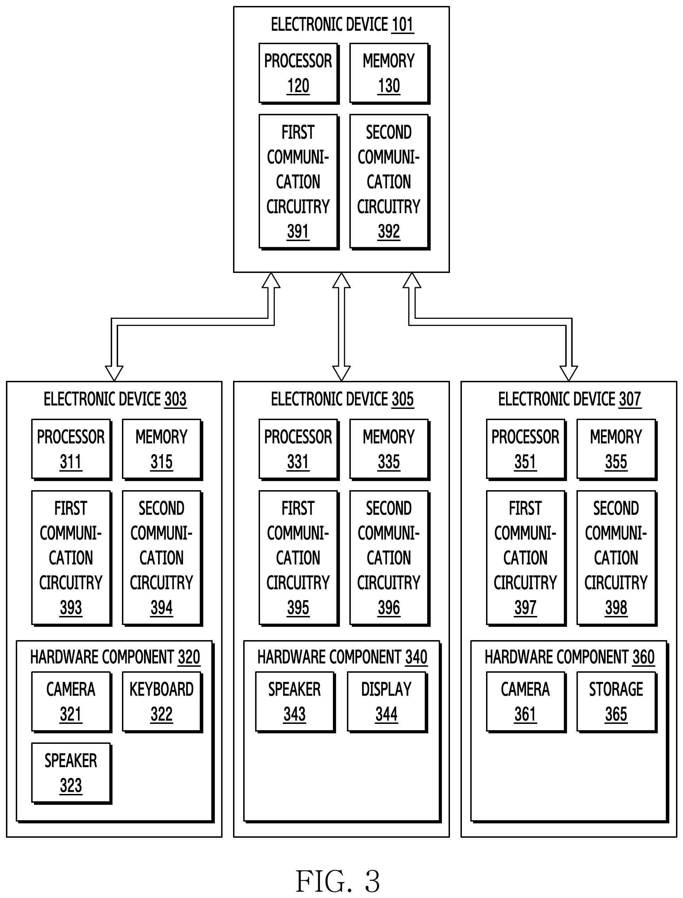

FIG. 3 illustrates an example of a wireless environment including an electronic device according to an embodiment.

In an embodiment, an electronic device 101 of FIG. 3 may correspond to the electronic device 101 of FIG. 1. Referring to FIG. 3, the electronic device 101 may include a processor 120, memory 130, first communication circuitry 391, and second communication circuitry 392.

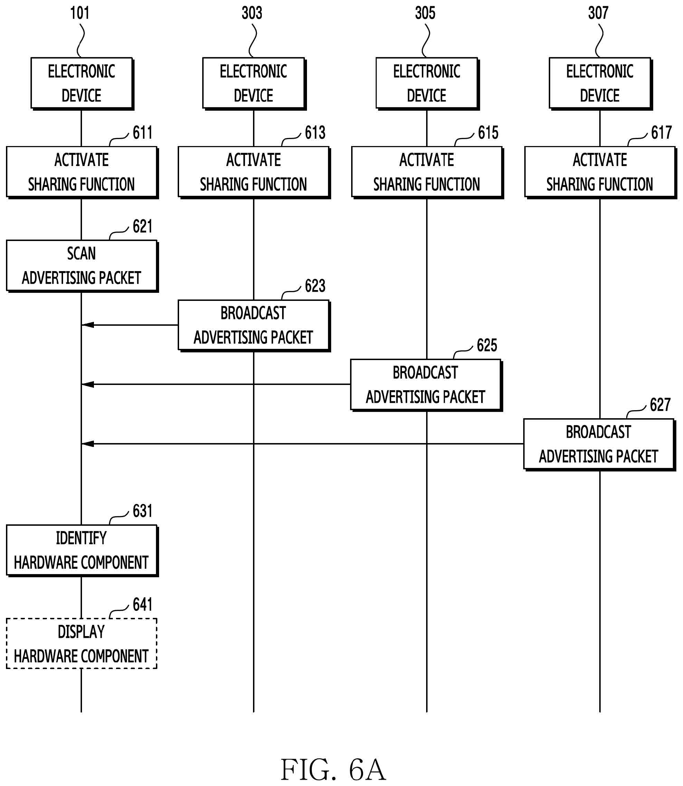

In an embodiment, the processor 120 may be used to execute operations of the electronic device 101 illustrated in descriptions of FIG. 6A to FIG. 7B, FIG. 10A to FIG. 10E, FIG. 12, and FIG. 14A to FIG. 15B. For example, the processor 120 may include at least a portion of the processor 120 of FIG. 1 or may correspond to at least a portion of the processor 120 of FIG. 1. For example, the processor 120 may include one or more processors including an application processor (AP) and/or a communication processor (CP). For example, the processor 120 may be implemented as a single chip such as a system on chip (SoC) or may be implemented as a plurality of chips. For example, the processor 120 may be implemented as one integrated circuit or may be implemented as a plurality of integrated circuits. For example, the processor 120 may be arranged in a distributed manner in the electronic device 101.

In an embodiment, the memory 130 may (at least temporarily) store instructions for executing operations of the electronic device 101 illustrated in the descriptions of FIG. 6A to FIG. 7B, FIG. 10A to FIG. 10E, FIG. 12, and FIG. 14A to FIG. 15B. The instructions may be executed by the processor 120. The instructions may be included in one or more programs 140 (e.g., the program 140 of FIG. 2) stored in the memory 130. For example, the memory 130 may include at least a portion of the memory 130 (or at least a portion of the non-volatile memory 134) of FIG. 1 or may correspond to at least a portion of the memory 130 (or at least a portion of the non-volatile memory 134) of FIG. 1. For example, the memory 130 may include a main memory (e.g., a random access memory (RAM)) in the electronic device 101, a register for the processor 120, a cache for the processor 120, a register for the communication circuits 391 and 392, a buffer (or a soft buffer) for the communication circuits 391 and 392, and/or an auxiliary memory (e.g., a hard disk drive (HDD) or a solid state drive (SSD)) of the electronic device 101. For example, the memory 130 may be implemented as a single chip or may be implemented as a plurality of chips. For example, the memory 130 may be implemented as one integrated circuit or may be implemented as a plurality of integrated circuits. For example, the memory 130 may be arranged in a distributed manner in the electronic device 101.

In an embodiment, the first communication circuitry 391 may be used to support Bluetooth communication (e.g., legacy Bluetooth communication (or classic Bluetooth communication) and/or Bluetooth low energy (BLE)) between the electronic device 101 and another electronic device (e.g., electronic devices 303, 305, and 307). However, a communication scheme of the first communication circuitry 391 is not limited to a Bluetooth communication scheme. The first communication circuitry 391 may be used to support communication between the electronic device 101 and another electronic device (e.g., the electronic devices 303, 305, and 307) based on various short-range wireless communication schemes (e.g., wireless fidelity (Wi-Fi), Wi-Fi Direct, Wi-Fi aware, Wi-Fi mobile hotspot, a Wi-Fi legacy communication scheme, and/or ultra wide band (UWB)).

For example, the first communication circuitry 391 may include at least a portion of the communication module 190 (or the wireless communication module 192) of FIG. 1, or may correspond to at least a portion of the communication module 190 (or the wireless communication module 192) of FIG. 1. For example, the first communication circuitry 391 may include communication circuitry for Bluetooth. For example, the first communication circuitry 391 may be used to establish a communication link. For example, the first communication circuitry 391 may be used to transmit a packet to external electronic devices 201 and 202 via the communication link. For example, the first communication circuitry 391 may be used to receive a packet from the electronic devices 303, 305, and 307 via the communication link. For example, the first communication circuitry 391 may be implemented as a single chip or may be implemented as a plurality of chips. For example, the first communication circuitry 391 may be implemented as one integrated circuit or may be implemented as a plurality of integrated circuits. For example, the first communication circuitry 391 may be arranged in a distributed manner in the electronic device 101.

In an embodiment, the second communication circuitry 392 may be used to further support a communication scheme different from the communication scheme of the first communication circuitry 391. For example, the second communication circuitry 392 may be used to further support another communication scheme (e.g., Wi-Fi, Wi-Fi Direct, Wi-Fi aware, Wi-Fi mobile hotspot, and/or a Wi-Fi legacy communication scheme) distinguished from the Bluetooth communication scheme. However, a communication scheme of the second communication circuitry 392 is not limited to Wi-Fi, Wi-Fi Direct, Wi-Fi aware, Wi-Fi mobile hotspot, or a Wi-Fi legacy communication scheme. The second communication circuitry 39 may be used to support communication between the electronic device 101 and another electronic device (e.g., the electronic devices 303, 305, and 307) based on various short-range wireless communication schemes (e.g., classic Bluetooth communication, BLE, and/or UWB).

For example, the second communication circuitry 392 may be implemented as a single chip or may be implemented as a plurality of chips. For example, the second communication circuitry 392 may be implemented as one integrated circuit or may be implemented as a plurality of integrated circuits. For example, the second communication circuitry 392 may be arranged in a distributed manner in the electronic device 101.

In an embodiment, the electronic device 101 may further include an additional hardware component in addition to hardware components illustrated in FIG. 3. For example, the electronic device 101 may include hardware components (e.g., the camera module 180, the display module 160, and/or the sound output module 155) illustrated through the electronic device 101 of FIG. 1.

In an embodiment, the electronic device 303 may include a processor 311, memory 315, first communication circuitry 393, and second communication circuitry 394. In an embodiment, each of the processor 311, the memory 315, the first communication circuitry 393, and the second communication circuitry 394 of the electronic device 303 may correspond to the processor 120, the memory 130, the first communication circuitry 391, and the second communication circuitry 392 of the electronic device 101, respectively. For example, a hardware configuration and/or an available function of the processor 311 may correspond to a hardware configuration and/or an available function of the processor 120. For example, a hardware configuration and/or an available function of the memory 315 may correspond to a hardware configuration and/or an available function of the memory 130. For example, a hardware configuration and/or an available function of the first communication circuitry 393 may correspond to a hardware configuration and/or an available function of the first communication circuitry 391. For example, a hardware configuration and/or an available function of the second communication circuitry 394 may correspond to a hardware configuration and/or an available function of the second communication circuitry 392.

In an embodiment, the electronic device 303 may include a shareable hardware component 320. For example, the shareable hardware component 320 may include a camera 321, a keyboard 322, and a speaker 323. In an embodiment, the camera 321 may correspond to the camera module 180 of FIG. 1. In an embodiment, the keyboard 322 may correspond to the input module 150 of FIG. 1. In an embodiment, the speaker 323 may correspond to the sound output module 155 and/or the audio module 170 of FIG. 1.

In an embodiment, the electronic device 303 may further include an additional hardware component in addition to the hardware components illustrated in FIG. 3. For example, the electronic device 303 may include hardware components illustrated through the electronic device 101 of FIG. 1.

In an embodiment, the electronic device 305 may include a processor 331, memory 335, first communication circuitry 395, and second communication circuitry 396. In an embodiment, each of the processor 331, the memory 335, the first communication circuitry 395, and the second communication circuitry 396 of the electronic device 305 may correspond to the processor 120, the memory 130, the first communication circuitry 391, and the second communication circuitry 392 of the electronic device 101, respectively.

In an embodiment, the electronic device 305 may include a shareable hardware component 340. For example, the shareable hardware component 340 may include a speaker 343 and a display 344. In an embodiment, the speaker 343 may correspond to the sound output module 155 and/or the audio module 170 of FIG. 1. In an embodiment, the display 344 may correspond to the display module 160 of FIG. 1.

In an embodiment, the electronic device 305 may further include an additional hardware component in addition to the hardware components illustrated in FIG. 3. For example, the electronic device 305 may include hardware components illustrated through the electronic device 101 of FIG. 1.

In an embodiment, the electronic device 307 may include a processor 351, memory 355, first communication circuitry 397, and second communication circuitry 398. In an embodiment, each of the processor 351, the memory 355, the first communication circuitry 397, and the second communication circuitry 398 of the electronic device 307 may correspond to the processor 120, the memory 130, the first communication circuitry 391, and the second communication circuitry 392 of the electronic device 101, respectively.

In an embodiment, the electronic device 307 may include a shareable hardware component 360. For example, the shareable hardware component 360 may include a camera 361 and storage 365. In an embodiment, the camera 361 may correspond to the camera module 180 of FIG. 1. In an embodiment, the storage 365 may correspond to the non-volatile memory 134 of FIG. 1.

In an embodiment, the electronic device 307 may further include an additional hardware component in addition to the hardware components illustrated in FIG. 3. For example, the electronic device 307 may include hardware components illustrated through the electronic device 101 of FIG. 1.

In an embodiment, the electronic device 101 and the electronic devices 303, 305, and 307 may be a portable communication device (e.g., a smartphone), a computer device, a portable multimedia device, a portable medical device, a camera, a wearable device, or a home appliance.

Hereinafter, operations in which the electronic device 101 advertises, to the electronic devices 303, 305, and 307, that sharing of a hardware component is activated may be described. Herein, the sharing of a hardware component of the electronic device 101 may be a function that enables a resource related to the hardware component of the electronic device 101 to be occupied by the electronic devices 303, 305, and 307 with which the hardware component is shared. Hereinafter, an electronic device sharing a hardware component may be referred to as a sharer (or a sharer device), and an electronic device to which the hardware component is shared may be referred to as a recipient (or a recipient device).

In an embodiment, the electronic device 101 may activate a sharing function of a hardware component. In an embodiment, the electronic device 101 may activate the sharing function of the hardware component in a deactivated state based on an input.

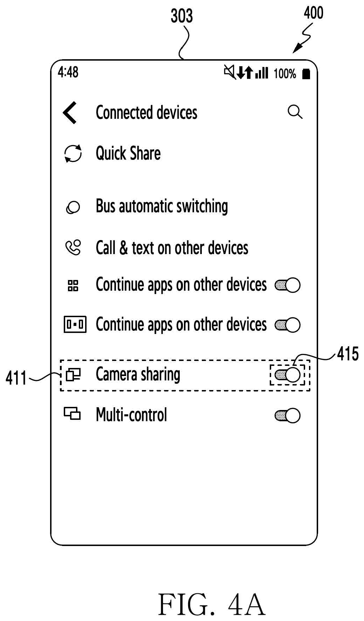

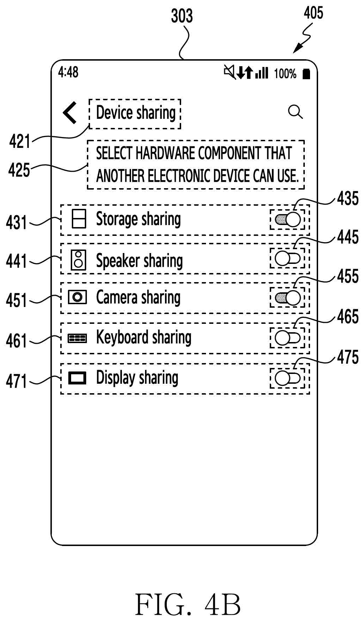

For example, the electronic device 101 may activate the sharing function of the hardware component based on an input for a user interface (UI) (e.g., screens 400 and 405 of FIG. 4A and/or FIG. 4B) for setting the sharing function. However, it is not limited thereto. For example, the electronic device 101 may maintain the sharing function in an activated state according to a default setting.

For example, the electronic device 101 may activate the sharing function to operate as a sharer of the hardware component. For example, the electronic device 101 may activate the sharing function to share at least one hardware component among shareable hardware components in the electronic device 101.

For example, the electronic device 101 may set a sharing condition of the hardware component. For example, the electronic device 101 may set a sharing condition limiting a range of recipients with which the hardware component may be shared. For example, the electronic device 101 may limit the range of recipients to electronic devices logged into the same account. For example, the electronic device 101 may limit the range of recipients to electronic devices logged into accounts of users (e.g., a colleague, a friend, or family) having the same designated relationship. However, it is not limited thereto.

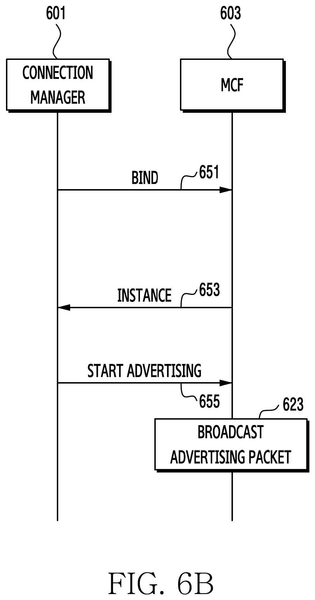

In an embodiment, based on activating the sharing function to share at least one hardware component, the electronic device 101 may broadcast, via the first communication circuitry 391, an advertising packet (e.g., ADV_IND) indicating that sharing is activated. In an embodiment, the electronic device 101 may periodically broadcast, via the first communication circuitry 391, the advertising packet indicating that sharing is activated. An operation of broadcasting the advertising packet indicating that sharing is activated may be described below with reference to FIG. 6B.

In an embodiment, the advertising packet may include consecutively arranged length, type, value (LTV) structures. Each of the LTV structures consecutively arranged in the advertising packet may include a length field and a data field. The length field may indicate a length of the data field of the LTV structure. The data field of each of the LTV structures may include a type field and a value field. The type field may have a length of 1 byte. The value field may have a length obtained by subtracting 1 byte from the length indicated by the length field.

In an embodiment, the advertising packet may include an LTV structure for a flag (hereinafter, a first LTV structure) and an LTV structure for broadcasting manufacturer specific data (hereinafter, a second LTV structure).

In an embodiment, user information (or account information) (or an account identification (ID)) of the electronic device 101 may be included in a field (e.g., a continuity LTV field) related to the sharing function (or multi-device continuity framework (MCF)) among fields included in the second LTV structure. In an embodiment, the MCF may be a framework for providing a continuous user experience among a plurality of electronic devices registered with the same account. For example, the MCF may generate a command controlling to search whether an electronic device registered with the same account is located nearby, a command instructing to exchange status information of electronic devices registered with the same account, or a command instructing connection with the electronic device registered with the same account. However, it is not limited thereto.

In an embodiment, information indicating that the sharing function is activated may be included in another field (e.g., another continuity LTV field (e.g., a ClientHandlerContext field)) related to the sharing function (or MCF) among the fields included in the second LTV structure. For example, the electronic device 101 may indicate that the sharing function is activated by inputting a designated value (e.g., 6) into a designated item (e.g., AppID) of another field related to the sharing function of the advertising packet.

Hereinafter, operations in which the electronic device 101 provides capability information (or a resource) of a hardware component for sharing to a recipient device (e.g., the electronic device 303) may be described.

In an embodiment, based on activating the sharing function to share the at least one hardware component, the electronic device 101 may broadcast a packet including capability information (or a resource) of at least one hardware component. For example, the packet including the capability information (or the resource) may include identification information (e.g., AppID, a sequence, or whether app data is present), a length of the app data, or the app data. Herein, whether app data is present may indicate whether the capability information (or the resource) is present. The app data may indicate the capability information (or the resource). When the sequence is changed, an update of the capability information (or the resource) of the hardware component may be triggered.

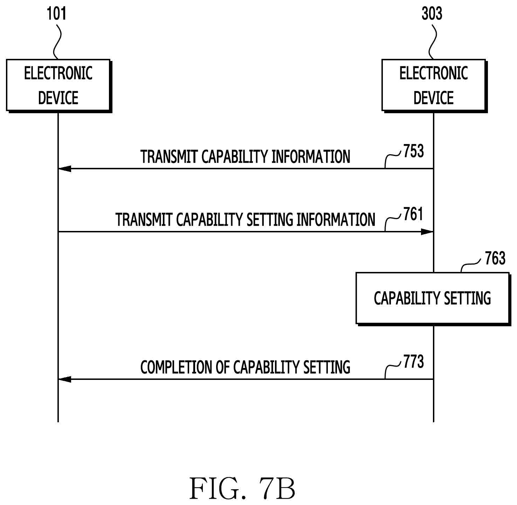

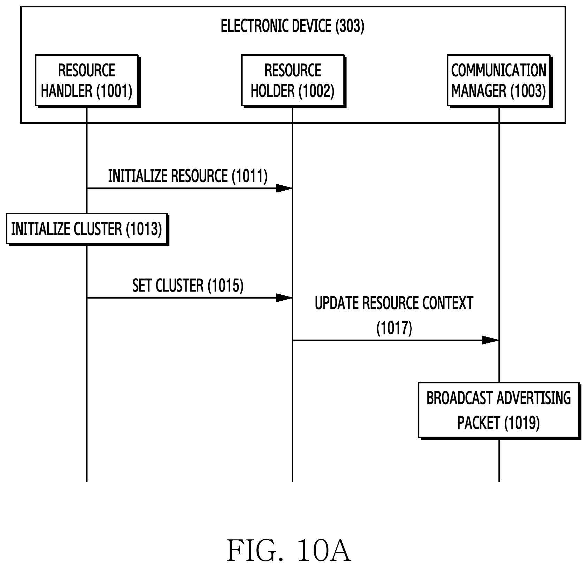

For example, the electronic device 101 may receive, via the first communication circuitry 391, a scan request (e.g., SCAN_REQ) from the recipient device (e.g., the electronic device 303). For example, the electronic device 101 may broadcast a packet (e.g., SCAN_RSP) including capability information in response to the scan request for the advertising packet indicating that sharing is activated. However, it is not limited thereto. For example, the electronic device 101 may include the capability information in the advertising packet indicating that sharing is activated. In this case, the scan request (e.g., SCAN_REQ) and/or a scan response (e.g., SCAN_RSP) may not be transmitted and/or received. In an embodiment, the scan response (e.g., SCAN_RSP) including the capability information may be referred to as a media setting specification message (e.g., MediaConfigSpec). An operation of transmitting and/or setting capability information may be described below with reference to FIG. 7B and FIG. 10A to FIG. 10E.

In an embodiment, the capability information may include information of the electronic device 101 (e.g., a name and a version of a user interface (UI) program (e.g., One UI)), information of a program for supporting the sharing function (e.g., a version and/or a version code), and/or information of a hardware component (e.g., a type and a supportable function (or property)). For example, when the hardware component is a camera, a supportable function (or property) may include a location (e.g., front or rear), a resolution (e.g., 720P, 1080P, 1440P, 2K, or 4K), a bitrate (e.g., 5 or 17), a frame rate (frames per second (FPS)) (e.g., 15 or 30), a default setting (e.g., a default setting for the resolution, the bitrate, and/or the frame rate), and/or an image effect (e.g., blur, face touch, auto frame, and/or high dynamic range (HDR)). However, it is not limited thereto. For example, when the hardware component is a speaker, a supportable function may include a sample rate, a bitrate, a bit depth, and/or the number of channels.

Hereinafter, operations in which the electronic device 101 sets performance of a hardware component for sharing may be described.

In an embodiment, the electronic device 101 may receive a scan request (e.g., SCAN_REQ) requesting setting of a hardware component from the recipient device. In an embodiment, the scan request (e.g., SCAN_REQ) requesting setting of the hardware component may be referred to as a media setting message (e.g., MediaConfig). In an embodiment, the media setting message included in the scan request (e.g., SCAN_REQ) may include a parameter indicating a media type of the hardware component and a parameter indicating a property of the hardware component. For example, when the hardware component is a camera, the media setting message included in the scan request (e.g., SCAN_REQ) may include a parameter indicating a media type of the camera (e.g., "mediaType": "video") and parameters indicating properties of the camera (e.g., "cameraLens": "rear", "resolution": "1080P", "bitrate": 15, "fps": 30). For example, when the hardware component is a speaker, the media setting message included in the scan request (e.g., SCAN_REQ) may include a parameter indicating a media type of the speaker (e.g., "mediaType": "audio") and parameters indicating properties of the speaker (e.g., "samplerate": 8, "bitrate": 16, "bitdepth": 16, "channel": "mono"). However, it is not limited thereto.

In an embodiment, the electronic device 101 may change a setting of the hardware component in response to the scan request (e.g., SCAN_REQ) requesting setting of the hardware component from the recipient device. In an embodiment, the electronic device 101 may broadcast a scan response (e.g., SCAN_RSP) indicating that the setting of the hardware component is changed.

In an embodiment, the scan response (e.g., SCAN_RSP) indicating that the setting of the hardware component is changed may be referred to as a media setting message (e.g., MediaConfig). In an embodiment, the scan response (e.g., SCAN_RSP) indicating that the setting of the hardware component is changed may indicate a result of a setting change of the hardware component (e.g., whether an error occurred).

According to an embodiment, the electronic device 101 may receive a scan request (e.g., SCAN_REQ) requesting a setting change of the hardware component from the recipient device. In an embodiment, the scan request (e.g., SCAN_REQ) requesting the setting change may be referred to as a media setting change message (e.g., ChangeMedia). In an embodiment, the media setting change message may include a parameter indicating a media type of the hardware component and a parameter for a property to be changed among properties of the hardware component. For example, when the hardware component is a camera, the media setting change message included in the scan request (e.g., SCAN_REQ) may include a parameter indicating a media type of the camera (e.g., "mediaType": "video") and a parameter indicating a part of properties of the camera (e.g., "bitrate": 3). In an embodiment, the electronic device 101 may change some settings among settings of the hardware component (e.g., changing a bitrate from 15 to 3) in response to the scan request (e.g., SCAN_REQ) requesting the setting change of the hardware component from the recipient device. In an embodiment, the electronic device 101 may broadcast the scan response (e.g., SCAN_RSP) indicating that the setting of the hardware component is changed.

According to an embodiment, the electronic device 101 may not receive the scan request (e.g., SCAN_REQ) requesting setting of the hardware component from the recipient device. In this case, the electronic device 101 may maintain the setting of the hardware component as a default setting.

Hereinafter, sharing operations for access to a hardware component of the electronic device 101 by a recipient device (e.g., the electronic device 303) may be described.

In an embodiment, the electronic device 101 may receive, from the recipient device, an execution request for a server program related to the hardware component. In an embodiment, the electronic device 101 may receive, from the recipient device, the execution request for the server program related to the hardware component after setting of the hardware component is completed. In an embodiment, the electronic device 101 may receive the execution request for the server program for connecting to a client program related to the hardware component executed in the recipient device. According to an embodiment, the execution request for the server program may include a binding request between the server program and the client program.

In an embodiment, the client program may communicate (e.g., inter-process communication (e.g., socket communication)) with the server program. For example, the client program may provide a request for execution (or control) (or access) of the hardware component to the communicatively connected server program. For example, the client program may provide, to an application 146, an execution result (or a control result) (or an access result) of the hardware component according to a request obtained from the communicatively connected server program. For example, the client program may be a set of one or more programs for providing one or more functions related to the hardware component to the application. In an embodiment, when the client program is executed, the client program may be referred to as a client process.

In an embodiment, the server program may communicate (e.g., inter-process communication (e.g., socket communication)) with the client program. For example, the server program may transmit, to a device driver related to the hardware component, a request for execution (or control) (or access) of the hardware component from the client program. For example, the server program may provide, to the communicatively connected client program, an execution result (or a control result) (or an access result) of the hardware component according to a request obtained from the device driver. For example, the server program may be a set of one or more programs for providing one or more functions related to the hardware component to the client program. In an embodiment, when the server program is executed, the server program may be referred to as a server process.

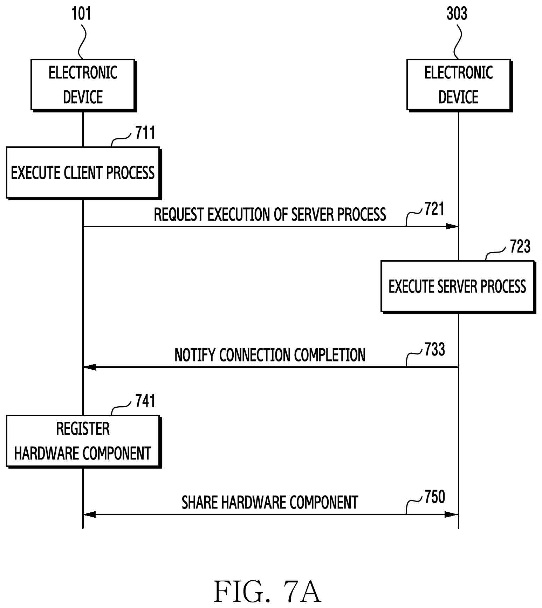

In an embodiment, in response to the execution request, the electronic device 101 may execute the server program related to the hardware component. In an embodiment, in response to the execution request, the electronic device 101 may establish a communication connection between the server program being executed and the client program executed in the recipient device. An operation of establishing the communication connection between the server program and the client program may be described below with reference to FIG. 7A.

In an embodiment, the electronic device 101 may obtain a request from the client program executed in the recipient device. In an embodiment, the request may include execution (or control) (or access) for the hardware component.

For example, when the hardware component is a camera, the request may include capturing through the camera. For example, when the hardware component is a camera, the request may include control of the camera (e.g., camera switching and/or application of a basic function provided by the camera). For example, the camera switching may include switching a camera for capturing among a plurality of cameras included in the electronic device 101. For example, the basic function provided by the camera may include blur, face touch, auto frame, and/or high dynamic range (HDR). However, it is not limited thereto.

For example, when the hardware component is a speaker, the request may include output (e.g., output through the speaker) of media (e.g., an audio file) through the speaker. For example, when the hardware component is a speaker, the request may include control of the speaker (e.g., changing a volume or application of a basic function provided by the speaker). However, it is not limited thereto.

For example, when the hardware component is a display, the request may include output (e.g., output through the display) of media (e.g., a still image and/or a video) through the display. For example, when the hardware component is a display, the request may include control of the display (e.g., changing brightness and/or changing frame rate). However, it is not limited thereto.

For example, when the hardware component is storage, the request may include reading and/or writing of data through the storage. However, it is not limited thereto.

In an embodiment, the electronic device 101 may perform execution (or control) (or access) for the hardware component based on the request from the client program executed in the recipient device. In an embodiment, the electronic device 101 may perform execution (or control) (or access) for the hardware component through the server program and/or the device driver.

In an embodiment, the electronic device 101 may transmit, to the client program, a response indicating an execution result (or a control result) (or an access result) of the hardware component through the server program.

In an embodiment, the communication between the server program and the client program may be performed via the first communication circuitry 391 and/or the second communication circuitry 392. For example, in a case of data with a relatively large size, data transfer between the server program and the client program may be performed via the second communication circuitry 392. For example, in a case of data with a relatively small size, data transfer between the server program and the client program may be performed via the first communication circuitry 391 and/or the second communication circuitry 392.

For example, when the hardware component is a camera, the request of the client program may be transmitted to the server program via the first communication circuitry 391 and/or the second communication circuitry 392. For example, when the hardware component is a camera, an image obtained by the camera may be transmitted from the server program to the client program via the second communication circuitry 392.

For example, when the hardware component is a speaker, a request for control of the speaker (e.g., changing a volume or application of a basic function provided by the speaker) may be transmitted to the server program via the first communication circuitry 391 and/or the second communication circuitry 392. For example, when the hardware component is a speaker, media (e.g., an audio file) may be transmitted from the client program to the server program via the second communication circuitry 392.

For example, when the hardware component is a display, a request for control of the display (e.g., changing brightness and/or changing a frame rate) may be transmitted to the server program via the first communication circuitry 391 and/or the second communication circuitry 392. For example, when the hardware component is a display, media (e.g., a still image and/or a video) may be transmitted from the client program to the server program via the second communication circuitry 392.

For example, when the hardware component is storage, a read request for data may be transmitted to the server program via the first communication circuitry 391 and/or the second communication circuitry 392. For example, when the hardware component is storage, data read from the storage according to the read request for data may be transmitted from the server program to the client program via the second communication circuitry 392. For example, when the hardware component is storage, a write request for data may be transmitted to the server program via the second communication circuitry 392. For example, when the hardware component is storage, a response according to the write request for data may be transmitted from the server program to the client program via the first communication circuitry 391 and/or the second communication circuitry 392.

In an embodiment, the electronic device 101 may perform execution (or control) (or access) for the hardware component based on a request from the client program executed in the recipient device. In an embodiment, the electronic device 101 may perform execution (or control) (or access) for the hardware component through the server program and/or the device driver.

In an embodiment, the electronic device 101 may transmit, to the client program, a response indicating an execution result (or a control result) (or an access result) of the hardware component through the server program.

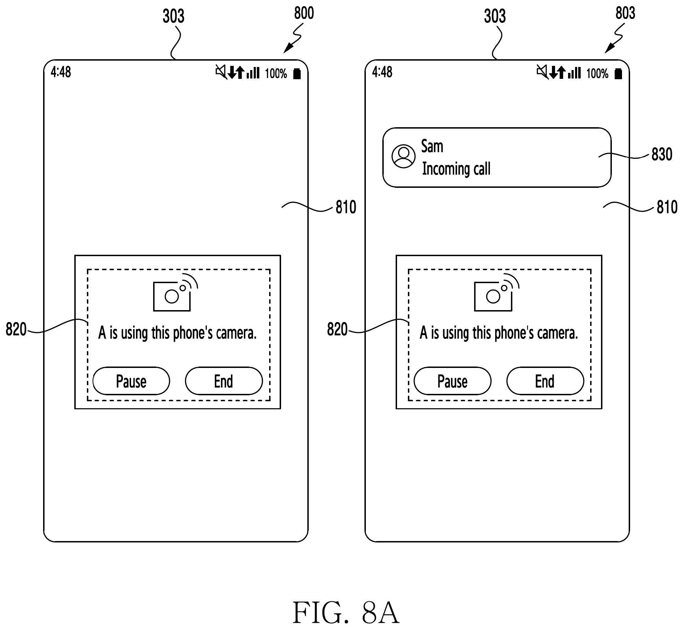

In an embodiment, while performing execution (or control) (or access) for the hardware component based on the request from the client program executed in the recipient device, the electronic device 101 may output a UI (e.g., screens 800 and 803 of FIG. 8A) indicating that the hardware component is shared with the recipient device.

Hereinafter, operations in which the electronic device 101 sets performance of a hardware component for sharing based on a loss rate may be described.

In an embodiment, the electronic device 101 may identify a communication environment related to the hardware component. For example, the communication environment may be related to transmission and/or reception of data related to the hardware component.

In an embodiment, the electronic device 101 may identify a loss rate of data related to the hardware component as one indicator indicating the communication environment. In an embodiment, the data may be data transferred between the server program and the client program. For example, the data may be data obtained by the hardware component and transferred from the server program to the client program. For example, the data may be data to be output to the hardware component and transferred from the client program to the server program. However, it is not limited thereto.

In an embodiment, the electronic device 101 may identify the loss rate of the data based on a reception report obtained from the recipient device. In an embodiment, the reception report may include information on the number of data received by the recipient device (hereinafter, the number of received data) and/or the number of data not received (hereinafter, the number of reception-failed data) by the recipient device during a designated time. In an embodiment, the recipient device may identify the number of received data and/or the number of reception-failed data based on a sequence number of the data. For example, the recipient device may transmit, to the electronic device 101, a reception report including information on the number of received data and/or reception-failed data during the designated time.

In an embodiment, the electronic device 101 may identify, as the loss rate, a ratio between the number of received data and/or the number of reception-failed data.

In an embodiment, the electronic device 101 may change throughput of a communication connection through which the electronic device 101 transmits data to the recipient device based on the communication environment. In an embodiment, the electronic device 101 may change the throughput of the communication connection through which the electronic device 101 transmits data to the recipient device based on the loss rate.

For example, the electronic device 101 may increase the throughput based on improvement of the communication environment. For example, the electronic device 101 may decrease the throughput based on deterioration of the communication environment. For example, the electronic device 101 may change the throughput by a first value when the loss rate is within a first range. For example, the electronic device 101 may change the throughput by a second value when the loss rate is within a second range. For example, the electronic device 101 may change the throughput by a third value when the loss rate is within a third range. Herein, a lower limit value of the second range may have a value higher than an upper limit value of the first range. A lower limit value of the third range may have a value higher than an upper limit value of the second range. The third value may be greater than the second value. In an embodiment, the electronic device 101 may increase the throughput when there is no loss rate (or when the throughput is low). In an embodiment, the electronic device 101 may decrease the throughput when there is a loss rate. In an embodiment, the electronic device 101 may decrease the throughput more as the loss rate is higher. For example, the first range may include a loss rate of 0%. For example, the second range may include a loss rate of 1 to 4%. For example, the third range may include a loss rate of 5 to 10%. For example, when the loss rate of 0% is identified, the electronic device 101 may increase the throughput by the first value. For example, when the loss rate between 1 and 4% is identified, the electronic device 101 may decrease the throughput by the second value. For example, when the loss rate between 5 and 10% is identified, the electronic device 101 may decrease the throughput by the third value.

In an embodiment, the electronic device 101 may change a setting of a hardware component being shared to change the throughput. In an embodiment, the electronic device 101 may change a parameter designated for each of hardware components. For example, when the hardware component is a camera, the electronic device 101 may change at least one (e.g., a bitrate) of a resolution, the bitrate, and/or a frame rate to change the throughput. However, it is not limited thereto.

Hereinafter, operations in which the electronic device 101 scans advertising packets of the electronic devices 303, 305, and 307 may be described.

In an embodiment, the electronic device 101 may activate a sharing function of a hardware component. In an embodiment, the electronic device 101 may activate a sharing function of a hardware component in a deactivated state based on an input.

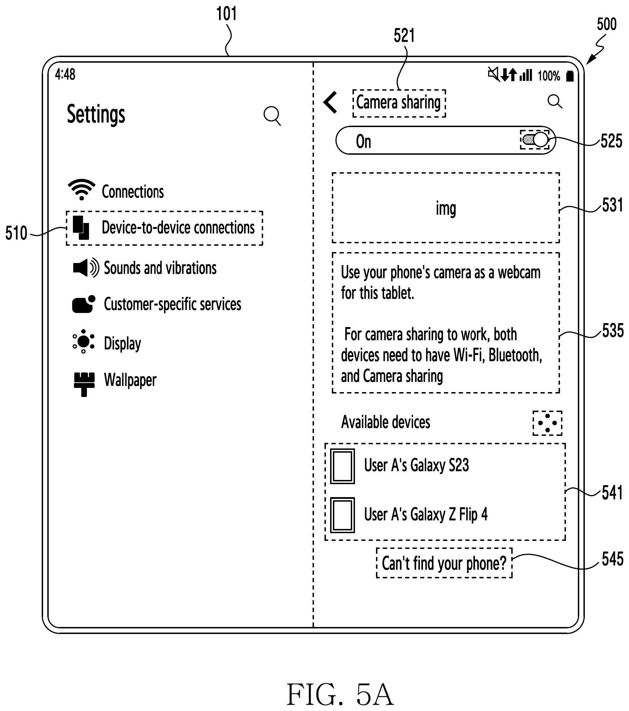

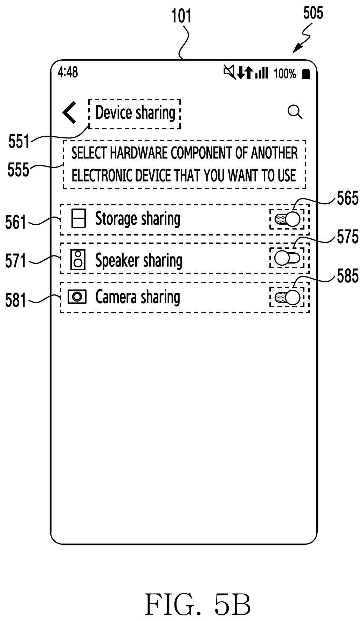

For example, the electronic device 101 may activate the sharing function of the hardware component based on an input for a UI (e.g., screens 500 and 505 of FIG. 5A and/or FIG. 5B) for setting the sharing function. However, it is not limited thereto. For example, the electronic device 101 may maintain the sharing function in an activated state according to a default setting.

For example, the electronic device 101 may activate the sharing function to operate as a recipient of the hardware component. For example, the electronic device 101 may activate the sharing function to be provided with at least one hardware component among shareable hardware components in the electronic device 101.

For example, the electronic device 101 may set a sharing condition of the hardware component. For example, the electronic device 101 may set a sharing condition limiting a range of sharers sharing the hardware component. For example, the electronic device 101 may limit the range of sharers to electronic devices logged into the same account. For example, the electronic device 101 may limit the range of sharers to electronic devices logged into accounts of users (e.g., a colleague, a friend, or family) having the same designated relationship. However, it is not limited thereto.

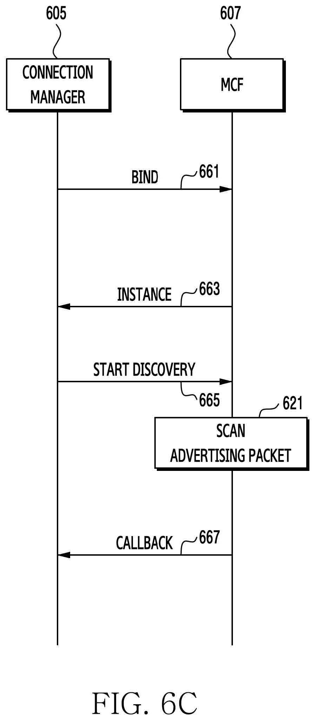

In an embodiment, based on activating the sharing function to be provided with at least one hardware component, the electronic device 101 may scan an advertising packet (e.g., ADV_IND) indicating that sharing is activated via the first communication circuitry 391. In an embodiment, the electronic device 101 may periodically scan the advertising packet indicating that sharing is activated, via the first communication circuitry 391. An operation of scanning the advertising packet indicating that sharing is activated may be described below with reference to FIG. 6C.

In an embodiment, the electronic device 101 may periodically scan an advertising packet including a field (e.g., a continuity LTV field) related to the sharing function (or MCF) via the first communication circuitry 391. In an embodiment, the electronic device 101 may periodically scan an advertising packet including user information (or designated account information) (or a designated account ID) designated in the continuity LTV field. In an embodiment, the electronic device 101 may periodically scan an advertising packet having user information satisfying the sharing condition.

In an embodiment, the electronic device 101 may periodically scan an advertising packet including information indicating that the sharing function is activated in another field (e.g., another continuity LTV field (e.g., a ClientHandlerContext field)) related to the sharing function (or MCF) among continuity LTV fields. For example, the electronic device 101 may periodically scan an advertising packet in which a designated value (e.g., 6) is input into a designated item (e.g., AppID) of another field related to the sharing function of the advertising packet.

Hereinafter, operations in which the electronic device 101 obtains capability information (or a resource) of a hardware component of a sharer may be described.

In an embodiment, based on receiving a designated advertising packet, the electronic device 101 may transmit, via the first communication circuitry 391, a scan request (e.g., SCAN_REQ) to a sharer device (e.g., the electronic device 303). In an embodiment, the electronic device 101 may transmit a scan request requesting capability information of at least one hardware component.

In an embodiment, the electronic device 101 may receive, from the sharer device, a packet (e.g., SCAN_RSP) including capability information in response to the scan request. In an embodiment, a scan response (e.g., SCAN_RSP) including the capability information may be referred to as a media setting specification message (e.g., MediaConfigSpec). However, it is not limited thereto. For example, the electronic device 101 may obtain the capability information from the advertising packet indicating that sharing is activated. In this case, the scan request (e.g., SCAN_REQ) and/or the scan response (e.g., SCAN_RSP) may not be transmitted and/or received.

In an embodiment, the electronic device 101 may identify, based on the packet (e.g., SCAN_RSP), a hardware component shared by the sharer device. In an embodiment, based on the hardware component shared by the sharer device corresponding to a hardware component for which the electronic device 101 activated the sharing function, the electronic device 101 may display, in a UI (e.g., a screen 500 of FIG. 5A) for setting the sharing function, a visual object indicating the detected sharer.

Hereinafter, operations in which the electronic device 101 sets performance of a hardware component for sharing may be described.

In an embodiment, the electronic device 101 may set performance of a hardware component of the sharer device. For example, when a plurality of sharer devices are searched, the electronic device 101 may set performance of a hardware component of one selected sharer device. For example, the electronic device 101 may select a sharer device most recently connected (or was provided with) (or shared) among the plurality of sharer devices. For example, the electronic device 101 may select a sharer device based on a selection of a user from among the plurality of sharer devices.

In an embodiment, the electronic device 101 may determine setting information of the hardware component based on a packet (e.g., SCAN_RSP) including capability information. In an embodiment, the electronic device 101 may determine setting information of the hardware component based on the packet (e.g., SCAN_RSP) including capability information received from the selected sharer device.

In an embodiment, the electronic device 101 may transmit, to the sharer device, a scan request (e.g., SCAN_REQ) requesting setting of the hardware component and including the determined setting information. In an embodiment, the scan request (e.g., SCAN_REQ) requesting setting of the hardware component may be referred to as a media setting message (e.g., MediaConfig). An operation of transmitting and/or setting capability information may be described below with reference to FIG. 7B and FIG. 10A to FIG. 10E.

In an embodiment, the electronic device 101 may receive, from the sharer device, a scan response (e.g., SCAN_RSP) indicating that the setting of the hardware component is changed. In an embodiment, the scan response (e.g., SCAN_RSP) indicating that the setting of the hardware component is changed may be referred to as a media setting message (e.g., MediaConfig).

According to an embodiment, the electronic device 101 may transmit, to the sharer device, a scan request (e.g., SCAN_REQ) requesting a setting change of the hardware component. In an embodiment, the scan request (e.g., SCAN_REQ) requesting the setting change may be referred to as a media setting change message (e.g., ChangeMedia). In an embodiment, the media setting change message may include a parameter indicating a media type of the hardware component and a parameter for a property to be changed among properties of the hardware component.

According to an embodiment, the electronic device 101 may not change the setting information of the hardware component from a default setting. In this case, the electronic device 101 may not transmit the scan request (e.g., SCAN_REQ) requesting setting of the hardware component to the sharer device. In this case, the setting of the hardware component of the sharer device may be maintained as the default setting.

Hereinafter, sharing operations for access to a hardware component of a sharer device (e.g., the electronic device 303) by the electronic device 101 may be described.

In an embodiment, the electronic device 101 may execute a client program related to a hardware component of the sharer device. In an embodiment, the electronic device 101 may execute the client program related to the hardware component of the sharer device after setting of the hardware component is completed.

In an embodiment, the electronic device 101 may transmit, to the sharer device, an execution request for a server program related to the hardware component. In an embodiment, the electronic device 101 may transmit, to the sharer device, the execution request for the server program related to the hardware component after execution of the client program (or setting of the hardware component) is completed. In an embodiment, the electronic device 101 may transmit, to the sharer device, the execution request for the server program for connecting to the client program. According to an embodiment, the execution request for the server program may include a binding request between the server program and the client program.

In an embodiment, the electronic device 101 may receive, from the sharer device, a response to the execution request. For example, the response to the execution request may include communication connection information between the client program and the server program. An operation of establishing a communication connection between the server program and the client program may be described below with reference to FIG. 7A.

In an embodiment, the electronic device 101 may activate (or load (e.g., INSMOD)) a (virtual) device driver related to the hardware component. For example, activating (or loading (e.g., INSMOD)) the (virtual) device driver related to the hardware component may include generating a (kernel) object indicating the hardware component in a kernel layer.

In an embodiment, when the electronic device 303 shares a plurality of hardware components of the same type (e.g., when sharing one or more front cameras and/or one or more rear cameras), the electronic device 101 may activate (or load (e.g., INSMOD)) one (virtual) device driver related to the hardware component.

In an embodiment, the electronic device 101 may register the hardware component in a device manager based on the client program being executed and the (virtual) device driver being activated (or loaded). For example, as the hardware component is registered in the device manager, a device list for a hardware component actually included in the electronic device 101 and a hardware component shared from the sharer device may be provided to the application 146 through the device manager. Herein, the device manager may be a program for managing the hardware component. For example, when the hardware component is a camera, the device manager may be a camera manager. For example, when the hardware component is a display, the device manager may be a display manager. However, it is not limited thereto.

In an embodiment, when the electronic device 303 shares a plurality of hardware components of the same type (e.g., when sharing one or more front cameras and/or one or more rear cameras), a device list including a plurality of hardware components may be provided to the application 146 as the hardware components are registered in the device manager.

In an embodiment, the electronic device 101 may obtain a request for a shared hardware component from the application 146. In an embodiment, the electronic device 101 may obtain a request from the client program executed in the recipient device. In an embodiment, the request may include execution (or control) (or access) for the hardware component. For example, when the hardware component is a camera, the request may include capturing through the camera. For example, when the hardware component is a speaker and/or a display, the request may include output of media through the speaker and/or the display (e.g., output through the speaker and/or output through the display). For example, when the hardware component is storage, the request may include reading and/or writing of data through the storage. However, it is not limited thereto.

In an embodiment, the electronic device 101 may transmit, to the client program, through the device manager, the request from the application 146. In an embodiment, the electronic device 101 may transmit the request transmitted to the client program to the server program executed in the sharer device.

In an embodiment, the electronic device 101 may obtain a response indicating an execution result (or a control result) (or an access result) of the hardware component from the server program.

In an embodiment, the electronic device 101 may transmit the response indicating the execution result (or the control result) (or the access result) of the hardware component to the application 146 through the client program and/or the device manager.

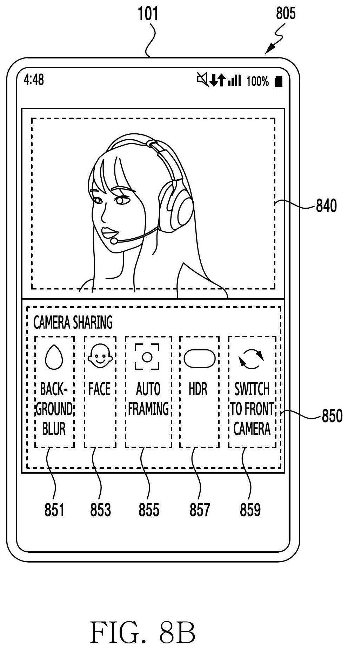

In an embodiment, while performing execution (or control) (or access) for the hardware component of the sharer device through the client program, the electronic device 101 may display data obtained from the hardware component of the sharer device and/or a UI (e.g., a screen 805 of FIG. 8B) for controlling the hardware component.

As described above, the electronic device 101 and the electronic devices 303, 305, and 307 may use a hardware component provided in another electronic device as their own hardware component. For example, the electronic device 101 provided with a shared hardware component may enable the application 146 of the electronic device 101 to recognize the hardware component by registering the hardware component in a framework of the electronic device 101. Accordingly, the electronic device 101 and the electronic devices 303, 305, and 307 may reduce limitations of the hardware component of the electronic device 101 used by a user by enabling sharing of the hardware component without installation of a dedicated application for communication.

FIG. 4A is a diagram illustrating an example of a screen displayed in another electronic device according to an embodiment.

FIG. 4A may be described with reference to FIG. 1 and FIG. 3.

Referring to FIG. 4A, in a setting screen 400, an electronic device 303 may set sharing of a camera to operate as a sharer of the camera. For example, based on an input for a visual object 415, which is located in an area 411 for setting sharing of the camera, the electronic device 303 may activate or deactivate the sharing of the camera. In an embodiment, the visual object 415 may be a toggle switch for selecting one option among two options (e.g., activation of sharing and deactivation of sharing).

In an embodiment, based on the sharing being activated, the electronic device 303 may broadcast, via first communication circuitry 393, an advertising packet indicating that the sharing is activated.

FIG. 4B is a diagram illustrating an example of a screen displayed in another electronic device according to an embodiment.

FIG. 4B may be described with reference to FIG. 1 and FIG. 3.

Referring to FIG. 4B, in a setting screen 405, an electronic device 303 may set sharing of at least one hardware component among a plurality of hardware components to operate as a sharer of the hardware component. In an embodiment, in the setting screen 405, a text object 421 indicating that the screen is for setting the sharing of the hardware component, an area 425 guiding sharing setting, and areas 431, 441, 451, 461, and 471 for setting a plurality of shareable hardware components may be included. However, it is not limited thereto.

For example, the electronic device 303 may identify the plurality of shareable hardware components through hardware resource initialization. For example, the electronic device 303 may display the identified plurality of hardware components in the areas 431, 441, 451, 461, and 471.

For example, the electronic device 303 may determine whether to share each of the plurality of hardware components based on a user input for visual objects 435, 445, 455, 465, and 475 located in the areas 431, 441, 451, 461, and 471. For example, based on an input for the visual object 435 located in the area 431 for setting sharing of storage, the electronic device 303 may activate or deactivate the sharing of the storage. For example, based on an input for the visual object 445 located in the area 441 for setting sharing of a speaker, the electronic device 303 may activate or deactivate the sharing of the speaker. For example, based on an input for the visual object 455 located in the area 451 for setting sharing of a camera, the electronic device 303 may activate or deactivate the sharing of the camera. For example, based on an input for the visual object 465 located in the area 461 for setting sharing of a keyboard, the electronic device 303 may activate or deactivate the sharing of the keyboard. For example, based on an input for the visual object 475 located in the area 471 for setting sharing of a display, the electronic device 303 may activate or deactivate the sharing of the display.

In an embodiment, based on the sharing being activated, the electronic device 303 may broadcast, via first communication circuitry 393, an advertising packet indicating that the sharing is activated.

FIG. 5A is a diagram illustrating an example of a screen displayed in an electronic device according to an embodiment.

FIG. 5A may be described with reference to FIG. 1 and FIG. 3.

Referring to FIG. 5A, in a setting screen 500, an electronic device 101 may set sharing of a camera to operate as a recipient of the camera. For example, in the setting screen 500, the electronic device 101 may display a screen for setting sharing of the camera based on an item 510 for connection between devices being selected. The screen for setting sharing of the camera may include a text object 521 indicating camera sharing, a visual object 525 for setting activation or deactivation of the camera sharing, an area 531 in which an image obtained from a sharer is displayed during the camera sharing, an area 535 guiding setting of the camera sharing, a list 541 of scanned sharers, and an object 545 for requesting an additional scan of a sharer.

For example, based on an input for the visual object 525 for setting sharing of the camera, the electronic device 101 may activate or deactivate the sharing of the camera. In an embodiment, the visual object 525 may be a toggle switch for selecting one option among two options (e.g., activation of sharing and deactivation of sharing).

In an embodiment, based on the sharing being activated, the electronic device 101 may scan an advertising packet indicating that the sharing is activated, via first communication circuitry 391. In an embodiment, while the sharing is activated, the electronic device 101 may display one or more electronic devices sharing the camera in the list 541.

FIG. 5B is a diagram illustrating an example of a screen displayed in an electronic device according to an embodiment.

FIG. 5B may be described with reference to FIG. 1 and FIG. 3.

Referring to FIG. 5B, in a setting screen 505, an electronic device 101 may set sharing of at least one hardware component among a plurality of hardware components to operate as a recipient of the hardware component. In an embodiment, in the setting screen 505, a text object 551 indicating that the screen is for setting the sharing of the hardware component, an area 555 guiding sharing setting, and areas 561, 571, and 581 for setting a plurality of shareable hardware components, may be included. However, it is not limited thereto.

For example, the electronic device 101 may identify a plurality of sharable hardware components through hardware resource initialization. For example, the electronic device 101 may display the identified plurality of hardware components in the areas 561, 571, and 581. Herein, the plurality of hardware components capable of being shared may be hardware components in which a client program and/or a device driver of each of the plurality of hardware components exists. In an embodiment, as the electronic device 101 additionally obtains (or downloads) a client program and/or a device driver, the plurality of hardware components capable of being shared may be further added.

For example, the electronic device 101 may determine whether to share each of the plurality of hardware components based on a user input for visual objects 565, 575, and 585 located in the areas 561, 571, and 581. For example, based on an input for the visual object 565 located in the area 561 for setting sharing of storage, the electronic device 101 may activate or deactivate the sharing of the storage. For example, based on an input for the visual object 575 located in the area 571 for setting sharing of a speaker, the electronic device 101 may activate or deactivate the sharing of the speaker. For example, based on an input for the visual object 585 located in the area 581 for setting sharing of a camera, the electronic device 101 may activate or deactivate the sharing of the camera.

In an embodiment, based on the sharing being activated, the electronic device 101 may scan an advertising packet indicating that the sharing is activated, via first communication circuitry 391.

FIG. 6A is a diagram illustrating operations for advertising and scanning between electronic devices according to an embodiment.

FIG. 6A may be described with reference to FIG. 1 to FIG. 5B.

Referring to FIG. 6A, in operation 611, an electronic device 101 may activate a sharing function. The electronic device 101 may activate the sharing function to be provided with at least one hardware component. For example, the electronic device 101 may activate the sharing function to be provided with at least one hardware component selected from among a plurality of hardware components capable of being shared.

In operation 613, an electronic device 303 may activate a sharing function. The electronic device 303 may activate the sharing function to share at least one hardware component. For example, the electronic device 303 may activate the sharing function to share at least one hardware component selected from among a plurality of shareable hardware components.

In operation 615, an electronic device 305 may activate a sharing function. The electronic device 305 may activate the sharing function to share at least one hardware component. For example, the electronic device 305 may activate the sharing function to share at least one hardware component selected from among a plurality of shareable hardware components.

In operation 617, an electronic device 307 may activate a sharing function. The electronic device 307 may activate the sharing function to share at least one hardware component. For example, the electronic device 307 may activate the sharing function to share at least one hardware component selected from among a plurality of shareable hardware components.

In operation 621, the electronic device 101 may scan an advertising packet. In an embodiment, based on the sharing being activated, the electronic device 101 may scan an advertising packet indicating that the sharing is activated, via first communication circuitry 391.

In an embodiment, the electronic device 101 may periodically scan an advertising packet including a field (e.g., a continuity LTV field) related to the sharing function (or MCF) via the first communication circuitry 391. In an embodiment, the electronic device 101 may periodically scan an advertising packet including user information (or designated account information) (or a designated account ID) designated in the continuity LTV field. In an embodiment, the electronic device 101 may periodically scan an advertising packet having user information satisfying a sharing condition.

In an embodiment, the electronic device 101 may periodically scan an advertising packet including information indicating that the sharing function is activated in another field (e.g., another continuity LTV field (e.g., a ClientHandlerContext field)) related to the sharing function (or MCF) among continuity LTV fields. For example, the electronic device 101 may periodically scan an advertising packet in which a designated value (e.g., 6) is input into a designated item (e.g., AppID) of another field related to the sharing function of the advertising packet.

In operation 623, the electronic device 303 may broadcast an advertising packet. In an embodiment, based on the sharing being activated, the electronic device 303 may broadcast, via first communication circuitry 393, an advertising packet indicating that the sharing is activated.

In operation 625, the electronic device 305 may broadcast an advertising packet. In an embodiment, based on the sharing being activated, the electronic device 305 may broadcast, via first communication circuitry 395, an advertising packet indicating that the sharing is activated.

In operation 627, the electronic device 307 may broadcast an advertising packet. In an embodiment, based on the sharing being activated, the electronic device 307 may broadcast, via first communication circuitry 397, an advertising packet indicating that the sharing is activated.

The advertising packet broadcast through operations 623, 625, and/or 627 may include an LTV structure for a flag and an LTV structure for broadcasting manufacturer specific data. The advertising packet broadcast through operations 623, 625, and/or 627 may include user information (or account information) (or an account ID). The advertising packet broadcast through operations 623, 625, and/or 627 may include information indicating that the sharing function is activated.

In operation 631, the electronic device 101 may identify a hardware component.

In an embodiment, based on receiving a designated advertising packet, the electronic device 101 may transmit, via the first communication circuitry 391, a scan request (e.g., SCAN_REQ) to sharer devices (e.g., the electronic devices 303, 305, and 307). In an embodiment, the electronic device 101 may transmit a scan request requesting capability information of at least one hardware component. In an embodiment, the electronic device 101 may receive, from the sharer devices (e.g., the electronic devices 303, 305, and 307), a packet (e.g., SCAN_RSP) including the capability information in response to the scan request. In an embodiment, based on the packet (e.g., SCAN_RSP), the electronic device 101 may identify the hardware component shared by each of the sharer devices (e.g., the electronic devices 303, 305, and 307).

In operation 641, the electronic device 101 may display the hardware component. In an embodiment, based on the hardware component shared by the sharer device corresponding to the hardware component for which the electronic device 101 activated the sharing function, the electronic device 101 may display a visual object indicating a searched sharer in a UI (e.g., the screen 500 of FIG. 5A) for setting the sharing function.

FIG. 6B is a diagram illustrating operations of broadcasting an advertising packet in electronic devices according to an embodiment.

FIG. 6B may be described with reference to FIG. 1 to FIG. 6A. The operations of FIG. 6B may be included in the operations 613 and 623 of FIG. 6A. The operations of FIG. 6B may be included in the operations 615 and 625 of FIG. 6A. The operations of FIG. 6B may be included in the operations 617 and 627 of FIG. 6A.

A connection manager 601 and an MCF 603 of FIG. 6B may be a part of a program of an electronic device 303. However, it is not limited thereto. The connection manager 601 and the MCF 603 of FIG. 6B may be a part of a program of an electronic device 305. The connection manager 601 and the MCF 603 of FIG. 6B may be a part of a program of an electronic device 307.

The operations of FIG. 6B may be performed based on activation of a sharing function of a hardware component for operating as a sharer.

Referring to FIG. 6B, in operation 651, the connection manager 601 may request a bind to the MCF 603. In an embodiment, the connection manager 601 may request a bind to the MCF 603 to connect an application (or a process) related to sharing of the hardware component to a network.

In an embodiment, in response to the bind request, the MCF 603 may establish a communication connection between the MCF 603 and the application (or the process) related to the sharing of the hardware component. Communication between the application (or the process) and the MCF 603 may be inter-process communication (e.g., socket communication).

In operation 653, the MCF 603 may return an instance to the connection manager 601. In an embodiment, the instance may include class information and/or identification information of the MCF 603. However, it is not limited thereto.

In operation 655, the connection manager 601 may request the MCP 603 to start advertising. The connection manager 601 may request the MCF 603 to start advertising for the sharing of the hardware component.

In operation 623, the MCF 603 may broadcast an advertising packet. In an embodiment, the MCF 603 may broadcast, via first communication circuitry 391, an advertising packet (e.g., ADV_IND) indicating that the sharing is activated.

FIG. 6C is a diagram illustrating operations of scanning an advertising packet in an electronic device according to an embodiment.

FIG. 6C may be described with reference to FIG. 1 to FIG. 6B. The operations of FIG. 6C may be included in the operations 611, 621, and 631 of FIG. 6A.

A connection manager 605 and an MCF 607 of FIG. 6C may be a part of a program 140 of an electronic device 101.

The operations of FIG. 6C may be performed based on activation of a sharing function of a hardware component for operating as a recipient.

Referring to FIG. 6C, in operation 661, the connection manager 605 may request a bind to the MCF 607. In an embodiment, the connection manager 605 may request a bind to the MCF 607 to connect an application (or a process) related to sharing of the hardware component to a network.

In an embodiment, in response to the bind request, the MCF 607 may establish a communication connection between the MCF 607 and the application (or the process) related to the sharing of the hardware component. Communication between the application (or the process) and the MCF 607 may be inter-process communication (e.g., socket communication).

In operation 663, the MCF 607 may return an instance to the connection manager 605. In an embodiment, the instance may include class information and/or identification information of the MCF 607. However, it is not limited thereto.

In operation 665, the connection manager 605 may request the MCF 607 to start discovery. The connection manager 605 may request the MCF 607 to start discovery for the sharing of the hardware component.

In operation 621, the MCF 607 may scan an advertising packet.

In operation 667, the MCF 607 may perform a callback to the connection manager 605. The MCF 607 may perform a callback to the connection manager 605 to indicate that an advertising packet indicating that the sharing of the hardware component is activated has been received. For example, when the received advertising packet does not indicate that the sharing of the hardware component is activated, the MCF 607 may not perform a callback to the connection manager 605 to indicate that the advertising packet has been received.

FIG. 7A is a diagram illustrating operations for sharing a hardware resource between electronic devices according to an embodiment.

FIG. 7A may be described with reference to FIG. 1 to FIG. 6C. The operations of FIG. 7A may be performed after the operation 631 or the operation 641 of FIG. 6A. The operations of FIG. 7A may be performed after the operation 667 of FIG. 6C.

Referring to FIG. 7A, in operation 711, an electronic device 101 may execute a client process. In an embodiment, after setting of a hardware component is completed, the electronic device 101 may execute a client program related to the hardware component of a sharer device (e.g., an electronic device 303).

In operation 721, the electronic device 101 may request the sharer device to execute a server process. In an embodiment, after execution of the client program (or setting of the hardware component) is completed, the electronic device 101 may transmit, to the sharer device, an execution request for a server program related to the hardware component. According to an embodiment, the execution request for the server program may include a binding request between the server program and the client program.

In operation 723, the electronic device 303 may execute the server process. In an embodiment, in response to the execution request, the electronic device 303 may execute the server program related to the hardware component.

In an embodiment, in response to the execution request, the electronic device 303 may establish a communication connection between the server program being executed and the client program executed in a recipient device (e.g., the electronic device 101).

In operation 733, the electronic device 303 may notify the electronic device 101 that the connection is completed.

In operation 741, the electronic device 101 may register the hardware component. The electronic device 101 may register the hardware component in a device manager. For example, as the hardware component is registered in the device manager, a device list for the hardware component actually included in the electronic device 101 and the hardware component shared from the sharer device may be provided to an application 146 via the device manager.

In operation 750, the electronic device 101 and the electronic device 303 may share the hardware component.

In an embodiment, the electronic device 101 may obtain a request for the shared hardware component from the application 146. In an embodiment, the electronic device 101 may obtain the request from the client program executed in the recipient device.

In an embodiment, the electronic device 101 may transmit the request from the application 146 to the client program via the device manager. In an embodiment, the electronic device 101 may transmit the request transmitted to the client program to the server program executed in the electronic device 303.

In an embodiment, based on the request, the electronic device 303 may obtain a response indicating an execution result (or a control result) (or an access result) of the hardware component. In an embodiment, the electronic device 303 may transmit the response to the client program executed in the electronic device 101 via the server program.

In an embodiment, the electronic device 101 may transmit, to the application 146, via the client program and/or the device manager, the response indicating the execution result (or the control result) (or the access result) of the hardware component.

FIG. 7B is a diagram illustrating operations for setting capability information of a hardware component between electronic devices according to an embodiment.

FIG. 7B may be described with reference to FIG. 1 to FIG. 6C. The operations of FIG. 7B may be performed after the operation 631 or the operation 641 of FIG. 6A. The operations of FIG. 7B may be performed after the operation 667 of FIG. 6C. The operations of FIG. 7B may be performed before the operation 711 of FIG. 7A. However, it is not limited thereto. The operations of FIG. 7B may be performed after the operation 741 of FIG. 7A.

Referring to FIG. 7B, in operation 753, an electronic device 303 may transmit, to an electronic device 101, capability information of a hardware component for which a sharing function is activated. For example, the electronic device 303 may broadcast, via first communication circuitry 393, to the electronic device 101, a media setting specification message (e.g., MediaConfigSpec) including the capability information of the hardware component.

In operation 761, the electronic device 101 may transmit capability setting information of the hardware component for which the sharing function is activated.

In an embodiment, the electronic device 101 may determine setting information of the hardware component based on the media setting specification message (e.g., MediaConfigSpec) including the capability information. In an embodiment, the electronic device 101 may transmit, via first communication circuitry 391, to the electronic device 303, a media setting message (e.g., MediaConfig) including the determined setting information.

In operation 763, the electronic device 303 may set performance of the hardware component for which the sharing function is activated. In an embodiment, the electronic device 303 may change a setting of the hardware component in response to the media setting message (e.g., MediaConfig).

In operation 773, the electronic device 303 may report completion of setting of the performance for the hardware component for which the sharing function is activated to the electronic device 101. In an embodiment, the electronic device 303 may transmit, to the electronic device 101, a media setting message (e.g., MediaConfig) indicating that the setting of the hardware component is changed.

FIG. 8A is a diagram illustrating an example of a screen displayed during sharing of a hardware resource in another electronic device according to an embodiment.

FIG. 8A may be described with reference to FIG. 1 and FIG. 7B.

Referring to FIG. 8A, during sharing of a camera (e.g., while sharing the camera with an electronic device 101), an electronic device 303 may display a screen 800 including a background area 810 and a UI 820 indicating that the camera is being shared. In an embodiment, the screen 800 may be a screen for indicating a sharing state of the camera. For example, information related to the camera may be displayed in the background area 810. For example, the electronic device 303 may display a preview image of an image obtained by the camera in a designated state (e.g., a blurred state) in the background area 810. However, it is not limited thereto.

In an embodiment, the UI 820 may include an object (e.g., pause) for ceasing the sharing of the camera.

In an embodiment, the electronic device 303 may cease the sharing of the camera based on a user input. For example, the user input for ceasing the sharing of the camera may include an input for an object (e.g., pause or end) of the UI 820 indicating that the camera is being shared. For example, based on an input for an object of the UI 820 for pause, the electronic device 303 may cease transmission of data obtained through the camera. For example, based on an input for the object of the UI 820 for pause, the electronic device 303 may cease obtaining data through the camera. For example, based on an input for an object of the UI 820 for end, the electronic device 303 may cease transmission of data obtained through the camera and may exit the screen 800. For example, based on an input for the object of the UI 820 for end, the electronic device 303 may cease obtaining data through the camera and may exit the screen 800. Herein, the electronic device 303 exiting the screen 800 may indicate that the electronic device 303 displays, on a display, another screen (e.g., a home screen, a lock screen, or a screen of another application) other than the screen 800. For example, based on an input for the object of the UI 820 for end, the electronic device 303 may deactivate a sharing function (a program and/or a device driver). According to an embodiment, the electronic device 303 may transmit, to the electronic device 101, a signal indicating that the sharing function (the program and/or the device driver) is deactivated. The electronic device 101 may deactivate the sharing function (the program and/or the device driver) based on the signal indicating that the sharing function (the program and/or the device driver) is deactivated.

For example, the user input for ceasing the sharing of the camera may include an input for exiting the screen 800 (e.g., an input for switching to the home screen or an input for switching an application). However, it is not limited thereto.

Referring to FIG. 8A, the electronic device 303 may identify a notification during the sharing of the camera. For example, based on identifying the notification, the electronic device 303 may display a UI 830 indicating the notification on the screen 803. In an embodiment, the notification may include a notification indicating that a call request is received. However, it is not limited thereto.

In an embodiment, the electronic device 303 may cease or pause the sharing of the camera based on a user input for the UI 830. However, it is not limited thereto.

FIG. 8B is a diagram illustrating an example of a screen displayed during sharing of a hardware resource in an electronic device according to an embodiment.

FIG. 8B may be described with reference to FIG. 1 and FIG. 7B.

Referring to FIG. 8B, during sharing of a camera (e.g., while being provided with the camera shared from an electronic device 303), an electronic device 101 may display a screen 805 including an area 840 indicating a preview image obtained from the camera and an area 850 for controlling the camera. In an embodiment, the screen 805 may be a screen for indicating a sharing state of the camera. For example, the area 850 may include objects 851, 853, 855, 857, and 859 for selecting one or more functions related to the camera.

For example, the one or more functions related to the camera may include image effects capable of being provided by the camera in capability information of a hardware component. For example, the image effects capable of being provided by the camera may include a background blur function 851 for applying a blur effect to an area other than a subject (or the same focal distance as the subject). For example, the image effects capable of being provided by the camera may include a face focus function 853 for automatically detecting a designated subject (e.g., a human face) and automatically adjusting focus and exposure based on the detected subject. For example, the image effects capable of being provided by the camera may include an auto-framing function 855 for automatically adjusting composition according to a subject (or the number of people being captured) (or a subject being captured). For example, the image effects capable of being provided by the camera may include a high dynamic range (HDR) function 857 for improving contrast (e.g., backlight correction). However, it is not limited thereto.

For example, the one or more functions related to the camera may include a function for switching (or changing) the camera. For example, based on an object 859 for switching (or changing) the camera being selected, the electronic device 101 may switch a camera to display a preview image in the area 840 of the screen 805 among cameras registered in the electronic device 101 (e.g., a physical camera of the electronic device 101 and the camera shared by the electronic device 303).

In an embodiment, the electronic device 101 may cease the sharing of the hardware component based on a user input. For example, the user input for ceasing the sharing of the hardware component may include an input for exiting the screen 805 (e.g., an input for switching to a home screen or an input for switching an application). However, it is not limited thereto.

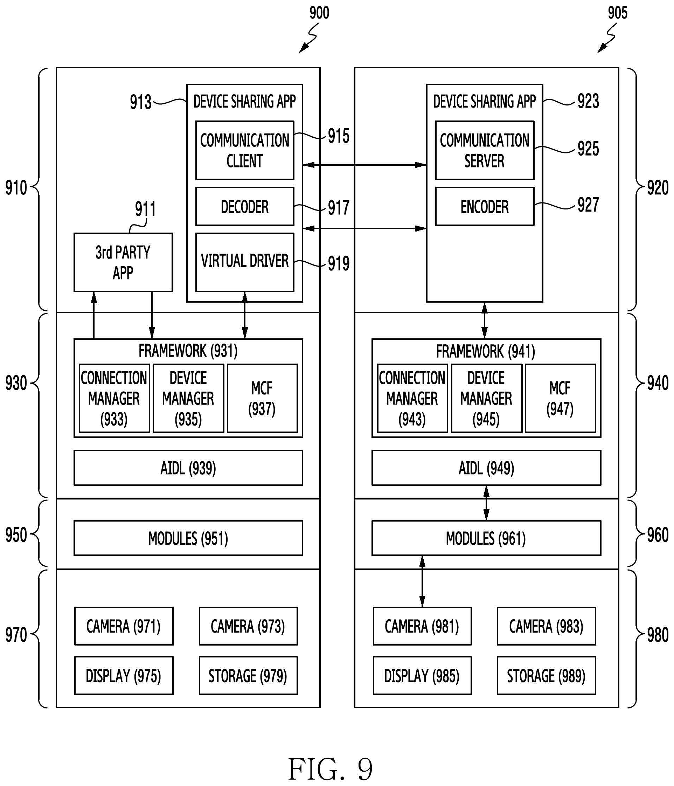

FIG. 9 is a diagram illustrating an example of a program architecture of electronic devices according to an embodiment.

A program architecture 900 of FIG. 9 may indicate a program architecture of a recipient device (or a guest device) (e.g., an electronic device 101), and a program architecture 905 may indicate a program architecture of a sharer device (or a host device) (e.g., electronic devices 303, 305, and 307).

The program architecture 900 may include an application layer 910, a framework layer 930, a hardware abstraction layer (HAL) 950, and a kernel layer 970.

The application layer 910 may include a 3^{rd} party application (APP) 911 and a device sharing APP 913. The framework layer 930 may include a framework 931 and an android interface definition language (AIDL) 939. The HAL 950 may include modules 951 for respective hardware components. Each of the modules 951 of the HAL 950 may be a program for interfacing with device drivers of a hardware component. The kernel layer 970 may include device drivers (e.g., a camera driver 971, a camera driver 973, a display driver 975, and a storage driver 979) of one or more hardware components.

The program architecture 905 may include an application layer 920, a framework layer 940, a HAL 960, and a kernel layer 980.

The application layer 920 may include a device sharing APP 923. The framework layer 940 may include a framework 941 and an AIDL 949. The HAL 960 may include modules 961 for respective hardware components. Each of the modules 961 of the HAL 960 may be a program for interfacing with device drivers of a hardware component. The kernel layer 980 may include device drivers (e.g., a camera driver 981, a camera driver 983, a display driver 985, and a storage driver 989) of one or more hardware components.

Referring to FIG. 9, a device manager 935 of the recipient device may identify an access request for a camera from the 3^{rd} party APP 911.

In an embodiment, based on a camera accessed by the 3^{rd} party APP 911 being a camera of the recipient device, the device manager 935 may transmit the access request to the camera via the AIDL 939, the modules 951 of the HAL 950, and the camera driver 971 to access the camera of the recipient device.

In an embodiment, based on a camera accessed by the 3^{rd} party APP 911 being a shared camera, the device manager 935 may transmit the access request to a camera of the sharer via a client program (or the device sharing APP 913), a server program (or a device sharing APP 923), a device manager 945, the AIDL 949, the modules 961 of the HAL 960, and the camera driver 981 to access the camera of the sharer device.

The server program (or the device sharing APP 923) may encode (e.g., encoding based on h.264) data (e.g., camera raw frame data), which is obtained from the camera in response to the request, via an encoder 927. In an embodiment, the encoder 927 may be an example of the server program.

The server program (or the device sharing APP 923) may transmit the encoded data to a communication client 915 of the client program (or the device sharing APP 913) via a communication server 925 (e.g., a real time streaming protocol (RTSP) server). In an embodiment, the communication server 925 may be an example of the server program. In an embodiment, the communication client 915 may be an example of the client program. In an embodiment, the communication server 925 and the communication client 915 may be communicatively connected by MCFs 937 and 947. For example, according to a bind request of connection managers 933 and 943, the MCFs 937 and 947 may bind the communication server 925 and the communication client 915. However, it is not limited thereto.

The client program (or the device sharing APP 913) may decode the encoded data via a decoder 917. In an embodiment, the decoder 917 may be an example of the client program.

The client program (or the device sharing APP 913) may transmit the decoded data to the 3^{rd} party APP 911 via a virtual driver 919 and the device manager 935.

According to an embodiment, programs included in the client program (or the device sharing APP 913) and/or the server program (or the device sharing APP 923) may be determined according to a setting of configuration performance between the sharer device and the recipient device. However, it is not limited thereto.

FIG. 10A is a diagram illustrating operations in which another electronic device requests initialization of a resource context according to an embodiment. The operations of FIG. 10A may be performed during booting of the electronic device 303. However, it is not limited thereto.

Referring to FIG. 10A, an electronic device 303 may include a resource handler 1001, a resource holder 1002, and a communication manager 1003. In an embodiment, the resource handler 1001 may be included in the device sharing APP 923 of FIG. 9. In an embodiment, the resource holder 1002 may be included in the MCF 947 of FIG. 9. In an embodiment, the communication manager 1003 may be included in the connection manager 943 of FIG. 9.

Referring to FIG. 10A, in operation 1011, the resource handler 1001 may initialize a resource of the resource holder 1002. For example, the resource holder 1002 may initialize a resource of a hardware component for sharing. The resource holder 1002 may initialize capability information of the hardware component for sharing.

In operation 1013, the resource handler 1001 may initialize a cluster. In an embodiment, the cluster may include one or more hardware components for sharing.

In operation 1015, the resource handler 1001 may set the cluster of the resource holder 1002. The resource handler 1001 may set one or more hardware components for sharing.

In operation 1017, the resource holder 1002 may request the communication manager 1003 for an update of a resource context. In an embodiment, the resource context may include the capability information of the hardware component and/or cluster information. However, it is not limited thereto.

In operation 1019, the communication manager 1003 may broadcast an advertising packet for updating the resource context.

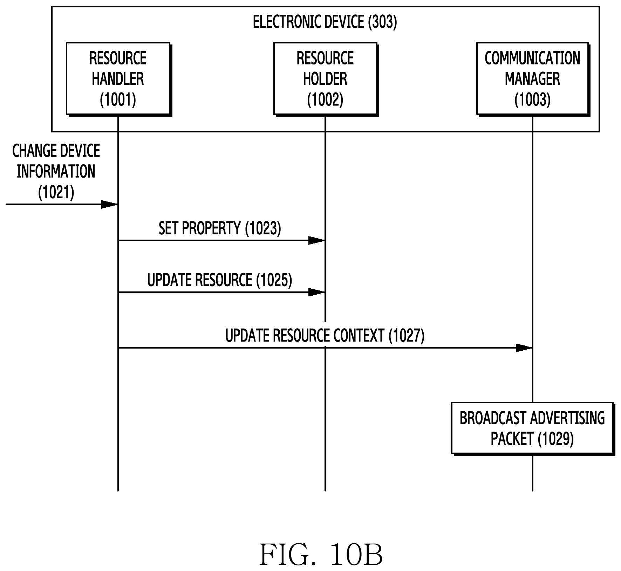

FIG. 10B is a diagram illustrating operations in which another electronic device requests an update of a resource context according to an embodiment. The operations of FIG. 10B may be performed in a situation other than booting of an electronic device 303 (e.g., during use). For example, the operations of FIG. 10B may be performed when the electronic device 303 is updated. For example, the update may be an update for additionally providing a service of a hardware component. For example, adding a service of a hardware component may include adding a shareable hardware component.

Referring to FIG. 10B, the electronic device 303 may include a resource handler 1001, a resource holder 1002, and a communication manager 1003. In an embodiment, the resource handler 1001 may be included in the device sharing APP 923 of FIG. 9. In an embodiment, the resource holder 1002 may be included in the MCF 947 of FIG. 9. In an embodiment, the communication manager 1003 may be included in the connection manager 943 of FIG. 9.

Referring to FIG. 10B, in operation 1021, the resource handler 1001 may obtain a message (e.g., intent and/or listener) indicating that device information (e.g., a hardware component) is changed.

In operation 1023, the resource handler 1001 may request the resource holder 1002 for a property setting. For example, the resource handler 1001 may request the resource holder 1002 for a setting of a property related to the hardware component. In an embodiment, setting the property may include changing a property of a resource.

In operation 1025, the resource handler 1001 may request the resource holder 1002 for an update of a resource. The resource handler 1001 may request the resource holder 1002 for an update of a resource of the hardware component for which the device information is changed. In an embodiment, updating the resource may include adding, deleting, and/or changing the resource.

In operation 1027, the resource handler 1001 may request the communication manager 1003 for an update of a resource context. In an embodiment, the resource context may include capability information of the hardware component and/or cluster information. However, it is not limited thereto.

In operation 1029, the communication manager 1003 may broadcast an advertising packet for updating the resource context.

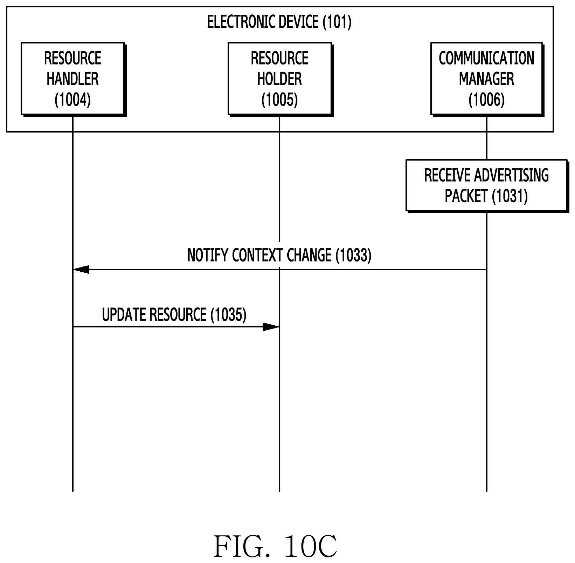

FIG. 10C is a diagram illustrating operations in which an electronic device updates a resource context according to an embodiment.

Referring to FIG. 10C, an electronic device 101 may include a resource handler 1004, a resource holder 1005, and a communication manager 1006. In an embodiment, the resource handler 1004 may be included in the device sharing APP 913 of FIG. 9. In an embodiment, the resource holder 1005 may be included in the MCF 937 of FIG. 9. In an embodiment, the communication manager 1006 may be included in the connection manager 933 of FIG. 9.

Referring to FIG. 10C, in operation 1031, the communication manager 1006 may receive an advertising packet. The communication manager 1006 may receive an advertising packet for updating a resource context.

In operation 1033, the communication manager 1006 may notify the resource handler 1004 of a change in context. The communication manager 1006 may notify the resource handler 1004 that the advertising packet for updating the resource context has been received.

In operation 1035, the resource handler 1004 may request the resource holder 1005 for an update of a resource. The resource handler 1004 may request the resource holder 1005 for the update of the resource based on the advertising packet.

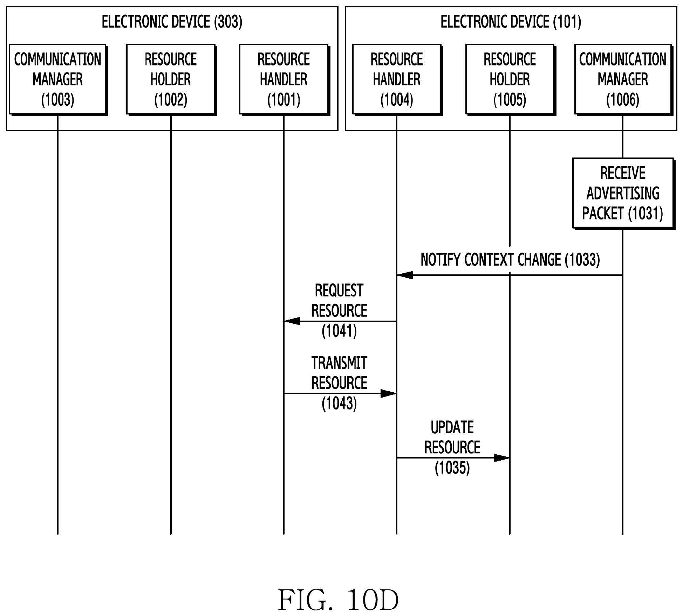

FIG. 10D is a diagram illustrating operations in which an electronic device requests a resource for updating a resource context according to an embodiment.

Referring to FIG. 10D, an electronic device 101 may include a resource handler 1004, a resource holder 1005, and a communication manager 1006. In an embodiment, the resource handler 1004 may be included in the device sharing APP 913 of FIG. 9. In an embodiment, the resource holder 1005 may be included in the MCF 937 of FIG. 9. In an embodiment, the communication manager 1006 may be included in the connection manager 933 of FIG. 9.

Referring to FIG. 10D, an electronic device 303 may include a resource handler 1001, a resource holder 1002, and a communication manager 1003. In an embodiment, the resource handler 1001 may be included in the device sharing APP 923 of FIG. 9. In an embodiment, the resource holder 1002 may be included in the MCF 947 of FIG. 9. In an embodiment, the communication manager 1003 may be included in the connection manager 943 of FIG. 9.

Referring to FIG. 10D, in operation 1031, the communication manager 1006 may receive an advertising packet. The communication manager 1006 may receive an advertising packet for updating a resource context.

In operation 1033, the communication manager 1006 may notify the resource handler 1004 of a change in context. The communication manager 1006 may notify the resource handler 1004 that the advertising packet for updating the resource context has been received.

In operation 1041, the resource handler 1004 may request a resource from the resource handler 1001. For example, when a resource for a hardware component of the electronic device 303 is not identified (in the advertising packet), the resource handler 1004 may request a resource from the resource handler 1001.

In operation 1043, the resource handler 1001 may transmit the resource to the resource handler 1004. For example, the resource handler 1001 may transmit the resource in a designated format (e.g., a JSON string format) to the resource handler 1004.

In operation 1035, the resource handler 1004 may request the resource holder 1005 for an update of a resource. The resource handler 1004 may request the resource holder 1005 for the update of the resource based on the resource obtained from the resource handler 1001.

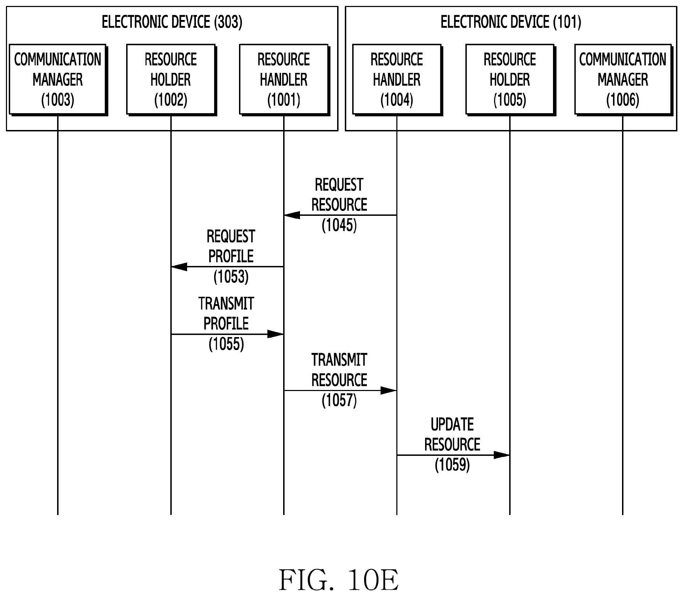

FIG. 10E is a diagram illustrating operations in which an electronic device requests a resource for updating a resource context according to an embodiment.

Referring to FIG. 10E, an electronic device 101 may include a resource handler 1004, a resource holder 1005, and a communication manager 1006. In an embodiment, the resource handler 1004 may be included in the device sharing APP 913 of FIG. 9. In an embodiment, the resource holder 1005 may be included in the MCF 937 of FIG. 9. In an embodiment, the communication manager 1006 may be included in the connection manager 933 of FIG. 9.

Referring to FIG. 10E, an electronic device 303 may include a resource handler 1001, a resource holder 1002, and a communication manager 1003. In an embodiment, the resource handler 1001 may be included in the device sharing APP 923 of FIG. 9. In an embodiment, the resource holder 1002 may be included in the MCF 947 of FIG. 9. In an embodiment, the communication manager 1003 may be included in the connection manager 943 of FIG. 9.

Referring to FIG. 10E, in operation 1051, the resource handler 1004 may request a resource from the resource handler 1001. For example, when a sequence included in an advertising packet of the electronic device 303 is changed, the resource handler 1004 may request a resource from the resource handler 1001. Herein, the sequence may be included as a part of identification information in a packet including capability information (or a resource).

In operation 1053, the resource handler 1001 may request a profile from the resource holder 1002. The resource handler 1001 may request the resource holder 1002 for a profile related to a hardware component.

In operation 1055, the resource holder 1002 may transmit the profile to the resource handler 1001.

In operation 1057, the resource handler 1001 may transmit the resource to the resource handler 1004. The resource handler 1001 may transmit the resource identified based on the profile to the resource handler 1004.

In operation 1059, the resource handler 1004 may request the resource holder 1005 for an update of a resource. The resource handler 1004 may request the resource holder 1005 for the update of the resource based on the resource obtained from the resource handler 1001.

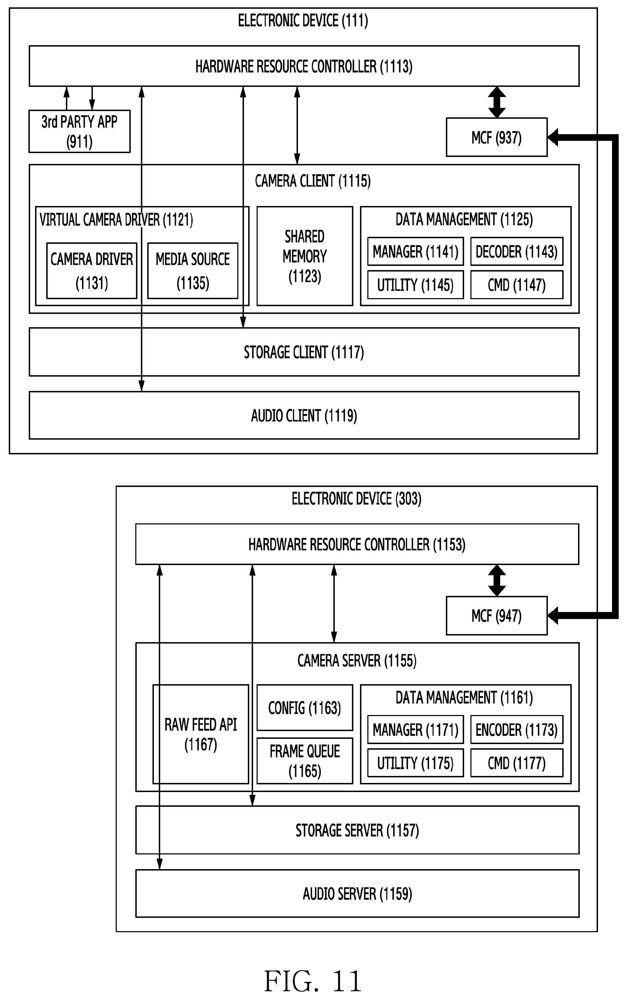

FIG. 11 is a diagram illustrating an example of relationships between processes of electronic devices according to an embodiment.

In an embodiment, a hardware resource controller 1113 of an electronic device 101 may be included in the device sharing APP 913 of FIG. 9. In an embodiment, at least one client among clients 1115, 1117, and 1119 of the electronic device 101 may be included in the device sharing APP 913 of FIG. 9. For example, when the electronic device 101 is provided with a shared camera, the hardware resource controller 1113 and a camera client 1115 may be included in the device sharing APP 913 of FIG. 9. For example, when the electronic device 101 is provided with shared storage, the hardware resource controller 1113 and a storage client 1117 may be included in the device sharing APP 913 of FIG. 9. For example, when the electronic device 101 is provided with a shared speaker, the hardware resource controller 1113 and an audio client 1119 may be included in the device sharing APP 913 of FIG. 9.

Referring to FIG. 11, each of the clients 1115, 1117, and 1119 may include a plurality of programs to provide a sharing function of a hardware component of the electronic device 303 to a 3^{rd} party APP 911. For example, in a case of the camera client 1115, programs for a virtual camera driver 1121, shared memory 1123, and data management 1125 may be included. For example, the virtual camera driver 1121 may include information on a camera driver 1131 and/or a media source 1135. For example, the data management 1125 may include information on a manager 1141, a decoder 1143, a utility 1145, and/or a command (CMD) 1147.

In an embodiment, a hardware resource controller 1153 of the electronic device 303 may be included in the device sharing APP 923 of FIG. 9. In an embodiment, at least one server among servers 1155, 1157, and 1159 of the electronic device 303 may be included in the device sharing APP 923 of FIG. 9. For example, when the electronic device 303 is provided with a shared camera, the hardware resource controller 1153 and a camera server 1155 may be included in the device sharing APP 923 of FIG. 9. For example, when the electronic device 303 is provided with shared storage, the hardware resource controller 1153 and a storage server 1157 may be included in the device sharing APP 923 of FIG. 9. For example, when the electronic device 303 is provided with a shared speaker, the hardware resource controller 1153 and an audio server 1159 may be included in the device sharing APP 923 of FIG. 9.

Referring to FIG. 11, each of the servers 1155, 1157, and 1159 may be connected to each of the clients 1115, 1117, and 1119 of the electronic device 101 through a communication connection via MCFs 937 and 947.

Each of the servers 1155, 1157, and 1159 may include a plurality of programs to provide a function corresponding to each of the clients 1115, 1117, and 1119 of the electronic device 101. For example, in a case of the camera server 1155, programs for data management 1161, CONFIG 1163, a frame queue 1165, and a RAW FEED application programming interface (API) 1167 may be included. For example, the data management 1161 may include information on a manager 1171, an encoder 1173, a utility 1175, and/or a CMD 1177. For example, the CONFIG 1163 may include setting information. The frame queue 1165 may include images obtained through the camera. The RAW FEED API 1167 may include an API for providing camera raw frame data.

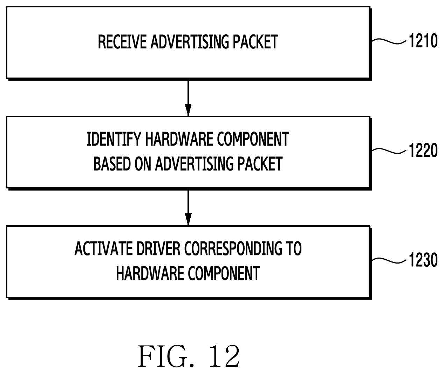

FIG. 12 is a flowchart illustrating an operation of an electronic device according to an embodiment.

Referring to FIG. 12, in operation 1210, an electronic device 101 may receive an advertising packet. The electronic device 101 may receive an advertising packet indicating that sharing is activated.

In operation 1220, the electronic device 101 may identify a hardware component based on the advertising packet. For example, the advertising packet indicating that sharing is activated may include information on a hardware component for which sharing is activated in the electronic device 303 that transmitted the advertising packet. For example, the electronic device 101 may identify the hardware component based on receiving the information on the hardware component for which sharing is activated.

In operation 1230, the electronic device 101 may activate a driver corresponding to the hardware component. For example, the electronic device 101 may execute a client program corresponding to the hardware component for which sharing is activated. For example, the electronic device 101 may request the electronic device 303 to execute a server program corresponding to the client program. For example, based on receiving a response from the electronic device 303 indicating that execution of the server program is completed, the electronic device 101 may activate (or load) the driver corresponding to the hardware component.

In an embodiment, based on receiving an advertising packet indicating that sharing is deactivated, the electronic device 101 may maintain a driver corresponding to a hardware component for which sharing is deactivated in a deactivated state. In an embodiment, based on the advertising packet being received while sharing of the hardware component of the electronic device 303 is deactivated, the electronic device 101 may maintain the driver corresponding to the hardware component in the deactivated state.

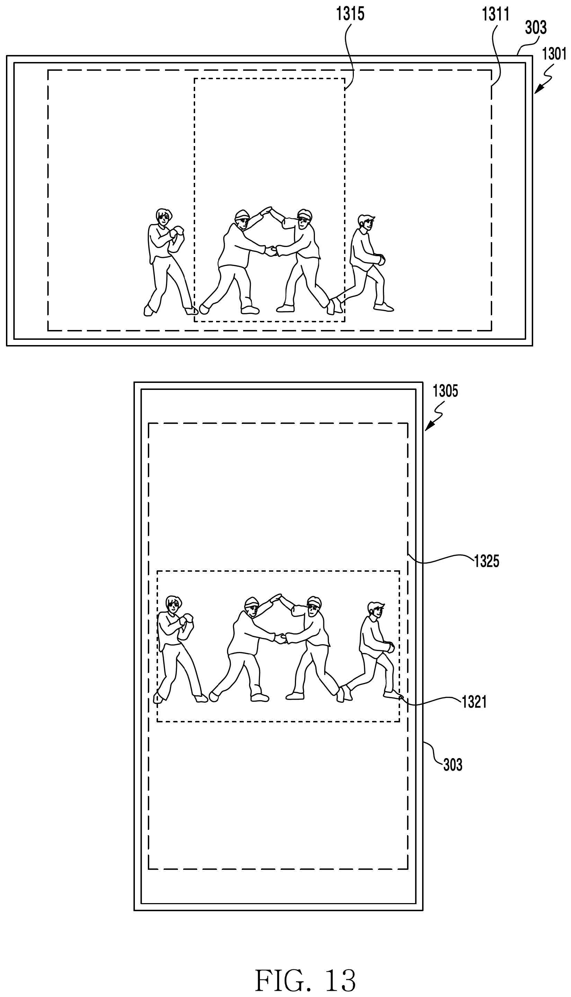

FIG. 13 is a diagram illustrating an example of different orientations and/or aspect ratios of electronic devices according to an embodiment.

FIG. 13 may illustrate a situation in which at least one of an orientation or an aspect ratio of an electronic device 101 and an electronic device 303 is different in a situation in which a camera of the electronic device 303 is shared with the electronic device 101.

A situation 1301 of FIG. 13 may indicate an image captured by the camera of the electronic device 303 while the orientation of the electronic device 303 is landscape. The image captured by the camera of the electronic device 303 may be displayed in a display area of a display (e.g., the display module 160 of FIG. 1) of the electronic device 101. For example, when the orientation and the aspect ratio of the electronic device 303 (or the image captured through the camera of the electronic device 303) are the same as the orientation and the aspect ratio of the electronic device 101 (or the display area of the electronic device 101), the image captured by the camera of the electronic device 303 may be displayed in the electronic device 101 (or the display area of the electronic device 101) without additional image processing.

In the situation 1301 of FIG. 13, although the orientation of the electronic device 101 (or the display area of the electronic device 101) and the orientation of the electronic device 303 (or the image captured through the camera of the electronic device 303) are both landscape, when the aspect ratio (e.g., 16:9) of the electronic device 101 (or the display area of the electronic device 101) is different from the aspect ratio (e.g., 4:3) of the electronic device 303 (or the image captured through the camera of the electronic device 303), an area 1311 of the image corresponding to the aspect ratio (e.g., 16:9) of the electronic device 101 (or the display area of the electronic device 101) may be displayed in the electronic device 101 (or the display area of the electronic device 101). Alternatively, in the situation 1301 of FIG. 13, when the orientation (i.e., portrait) of the electronic device 101 (or the display area of the electronic device 101) is different from the orientation (i.e., landscape) of the electronic device 303 (or the image captured through the camera of the electronic device 303), an area 1315 of the image corresponding to the orientation (i.e., portrait) of the electronic device 101 (or the display area of the electronic device 101) may be displayed in the electronic device 101 (or the display area of the electronic device 101). Alternatively, in the situation 1301 of FIG. 13, when the orientation (i.e., portrait) and the aspect ratio (e.g., 9:16) of the electronic device 101 (or the display area of the electronic device 101) are different from the orientation (i.e., landscape) and the aspect ratio (e.g., 4:3) of the electronic device 303 (or the image captured through the camera of the electronic device 303), the area 1315 of the image corresponding to the orientation (i.e., portrait) and the aspect ratio (e.g., 9:16) of the electronic device 101 (or the display area of the electronic device 101) may be displayed in the electronic device 101 (or the display area of the electronic device 101).

A situation 1305 of FIG. 13 may indicate an image captured by the camera of the electronic device 303 while the orientation of the electronic device 303 is portrait. The image captured by the camera of the electronic device 303 may be displayed in the display area of the display (e.g., the display module 160 of FIG. 1) of the electronic device 101. For example, when the orientation and the aspect ratio of the electronic device 303 (or the image captured through the camera of the electronic device 303) are the same as the orientation and the aspect ratio of the electronic device 101 (or the display area of the electronic device 101), the image captured by the camera of the electronic device 303 may be displayed in the electronic device 101 (or the display area of the electronic device 101) without additional image processing.

In the situation 1305 of FIG. 13, when the orientation (i.e., landscape) of the electronic device 101 (or the display area of the electronic device 101) is different from the orientation (i.e., portrait) of the electronic device 303 (or the image captured through the camera of the electronic device 303), an area 1321 of the image corresponding to the orientation (i.e., landscape) of the electronic device 101 (or the display area of the electronic device 101) may be displayed in the electronic device 101 (or the display area of the electronic device 101). Alternatively, in the situation 1305 of FIG. 13, when the orientation (i.e., landscape) and the aspect ratio (e.g., 16:9) of the electronic device 101 (or the display area of the electronic device 101) are different from the orientation (i.e., portrait) and the aspect ratio (e.g., 3:4) of the electronic device 303 (or the image captured through the camera of the electronic device 303), the area 1315 of the image corresponding to the orientation (i.e., portrait) and the aspect ratio (e.g., 16:9) of the electronic device 101 (or the display area of the electronic device 101) may be displayed in the electronic device 101 (or the display area of the electronic device 101). In the situation 1305 of FIG. 13, although the orientation of the electronic device 101 and the orientation of the electronic device 303 (or the image captured through the camera of the electronic device 303) are both portrait, when the aspect ratio (e.g., 9:16) of the electronic device 101 (or the display area of the electronic device 101) is different from the aspect ratio (e.g., 3:4) of the electronic device 303 (or the image captured through the camera of the electronic device 303), an area 1325 of the image corresponding to the aspect ratio (e.g., 9:16) of the electronic device 101 (or the display area of the electronic device 101) may be displayed in the display area of the electronic device 101.

According to a situation, when the orientation of the electronic device 101 (or the area displayed in the electronic device 101) and the orientation of the electronic device 303 (or the image captured through the camera) are different, a rotated image may be displayed in the electronic device 101 (or the area displayed in the electronic device 101). For example, when the electronic device 101 in a portrait state is rotated by 90 degrees in a first direction (e.g., clockwise) and the electronic device 303 in the portrait state is rotated by 90 degrees in a second direction (e.g., counterclockwise) opposite to the first direction, a rotated image may be displayed in the electronic device 101 (or the area displayed in the electronic device 101). For example, when the electronic device 101 is rotated by 180 degrees in the first direction or the second direction in the portrait state and the electronic device 303 is not rotated in the portrait state, a rotated image may be displayed in the electronic device 101 (or the area displayed in the electronic device 101). However, it is not limited thereto.

Referring to the situations 1301 and 1305 of FIG. 13, when the aspect ratio of the electronic device 101 (or the area displayed in the electronic device 101) and the aspect ratio of the electronic device 303 (or the image captured through the camera) are different, only a portion of the image may be displayed in the electronic device 101 (or the area displayed in the electronic device 101).

Accordingly, a method may be required for the orientation and/or the aspect ratio of the electronic device 101 (or the area displayed in the electronic device 101) and the orientation and/or the aspect ratio of the electronic device 303 (or the image captured through the camera) to correspond to each other.

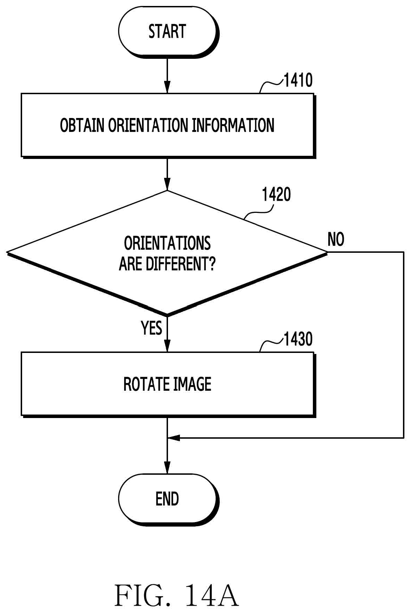

FIG. 14A is a flowchart illustrating an operation of an electronic device according to an embodiment.

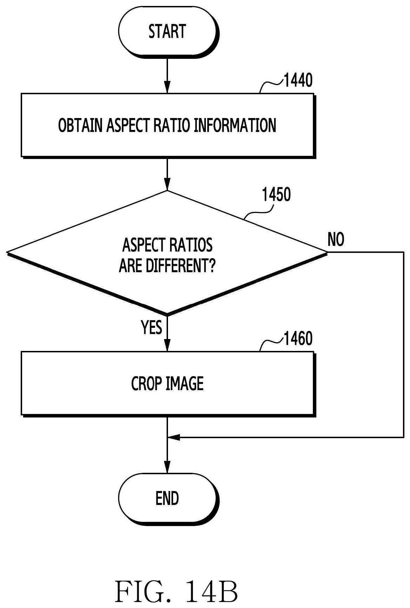

The operations of FIG. 14A may be performed in parallel with operations of FIG. 14B. However, it is not limited thereto. After the operations of FIG. 14A are performed, the operations of FIG. 14B may be performed. After the operations of FIG. 14B are performed, the operations of FIG. 14A may be performed.

Referring to FIG. 14A, in operation 1410, an electronic device 101 may obtain orientation information of the electronic device 101 and orientation information of an electronic device 303. In an embodiment, the electronic device 101 may obtain orientation information of the electronic device 303 from the electronic device 303. For example, the electronic device 101 may obtain orientation information by requesting it from the electronic device 303, periodically receive orientation information from the electronic device 303, or obtain orientation information of the electronic device 303 based on a change in the orientation of the electronic device 303. For example, the electronic device 101 may obtain orientation information of the electronic device 101 based on a sensor (e.g., the sensor module 176 of FIG. 1) (e.g., an acceleration sensor) of the electronic device 101.

In operation 1420, the electronic device 101 may determine whether orientations are different. In an embodiment, the electronic device 101 may determine whether the orientation of the electronic device 101 and the orientation of the electronic device 303 are different. In an embodiment, the electronic device 101 may determine whether an orientation of an area displayed in the electronic device 101 and an orientation of an image captured through a camera of the electronic device 303 are different.

Based on determining that the orientations are different in operation 1420, the electronic device 101 may perform operation 1430. Based on determining that the orientations are the same in operation 1420, the electronic device 101 may terminate the operations of FIG. 14A.

In operation 1430, the electronic device 101 may rotate the image. The electronic device 101 may rotate the image by a rotation amount (e.g., 90 degrees, -90 degrees, or 180 degrees) for the orientation of the electronic device 101 and the orientation of the electronic device 303 to correspond to each other. In an embodiment, the electronic device 101 may rotate the image by a rotation amount for the orientation of the area displayed in the electronic device 101 and the orientation of the image captured through the camera of the electronic device 303 to correspond to each other.

FIG. 14B is a flowchart illustrating an operation of an electronic device according to an embodiment.

The operations of FIG. 14B may be performed in parallel with operations of FIG. 14A. However, it is not limited thereto. After the operations of FIG. 14B are performed, the operations of FIG. 14A may be performed. After the operations of FIG. 14A are performed, the operations of FIG. 14B may be performed.

Referring to FIG. 14B, in operation 1440, an electronic device 101 may obtain aspect ratio information of the electronic device 101 and aspect ratio information of an electronic device 303. In an embodiment, the electronic device 101 may obtain aspect ratio information of the electronic device 303 from the electronic device 303. For example, the electronic device 101 may obtain aspect ratio information by requesting it from the electronic device 303, or may obtain the aspect ratio of the electronic device 303 based on a change in an orientation of the electronic device 303. In an embodiment, the electronic device 101 may obtain information on an aspect ratio of an area displayed in the electronic device 101 and an aspect ratio of an image captured through a camera of the electronic device 303.

In operation 1450, the electronic device 101 may determine whether aspect ratios are different. In an embodiment, the electronic device 101 may determine whether the aspect ratio of the area displayed in the electronic device 101 and the aspect ratio of the image captured through the camera of the electronic device 303 are different.

Based on determining that the aspect ratios are different in operation 1450, the electronic device 101 may perform operation 1460. Based on determining that the aspect ratios are the same in operation 1450, the electronic device 101 may terminate the operations of FIG. 14B.

In operation 1460, the electronic device 101 may crop the image. In an embodiment, the electronic device 101 may crop the image captured through the camera of the electronic device 303 by an area displayed in the electronic device 101.

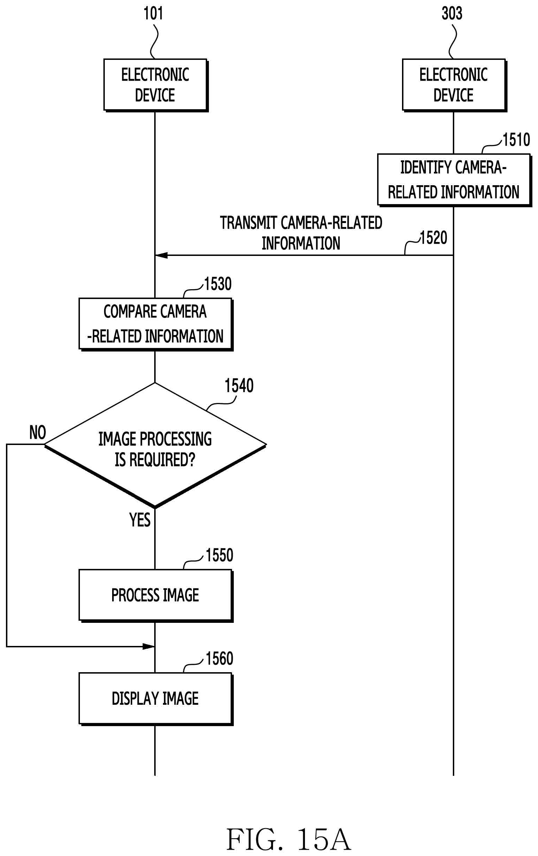

FIG. 15A is a diagram illustrating operations in which an electronic device processes an image according to an embodiment.

In the operations of FIG. 15A, an electronic device 303 may be a sharer device sharing a camera with an electronic device 101, and the electronic device 101 may be a recipient device using the camera of the electronic device 303. Substantially simultaneously with the operations of FIG. 15A, the electronic device 303 may be sharing, with the electronic device 101, an original image obtained through the camera.

Referring to FIG. 15A, in operation 1510, the electronic device 303 may identify camera-related information.

In an embodiment, the camera-related information may include orientation information of the electronic device 303. In an embodiment, the orientation information may indicate a degree to which the electronic device 303 (or the camera of the electronic device 303) has rotated in a designated direction (e.g., clockwise or counterclockwise) from a normal state (e.g., a portrait state). For example, the electronic device 303 may identify the orientation of the electronic device 303 based on a sensor (e.g., the sensor module 176 of FIG. 1) (e.g., an acceleration sensor) of the electronic device 303.

In an embodiment, the camera-related information may include size information (or resolution information) (or aspect ratio information) of an image captured by the camera of the electronic device 303.

In operation 1520, the electronic device 303 may transmit the camera-related information to the electronic device 101. The electronic device 303 may transmit the camera-related information to the electronic device 101 based on a change in the camera-related information of the electronic device 303. For example, the electronic device 303 may transmit the orientation information to the electronic device 101 based on a change in the orientation of the electronic device 303. For example, the electronic device 303 may transmit the size information (or the resolution information) (or the aspect ratio information) to the electronic device 101 based on a change in the size information (or the resolution information) (or the aspect ratio information) of the image captured by the camera of the electronic device 303.

In operation 1530, the electronic device 101 may compare the camera-related information.

In an embodiment, the electronic device 101 may compare an orientation of the electronic device 101 with the orientation of the electronic device 303. In an embodiment, the electronic device 101 may compare an orientation of an area displayed in the recipient device (e.g., the electronic device 101) with an orientation of the image captured through the camera of the sharer device (e.g., the electronic device 303).

In an embodiment, the electronic device 101 may compare size information (or resolution information) (or aspect ratio information) of a display area of the electronic device 101 with size information (or resolution information) (or aspect ratio information) of a display area of the electronic device 303. In an embodiment, the electronic device 101 may compare the size information (or the resolution information) (or the aspect ratio information) of the area displayed in the recipient device with the size information (or the resolution information) (or the aspect ratio information) of the image captured through the camera of the sharer device.

In operation 1540, the electronic device 101 may determine whether image processing is required.

For example, when the orientation of the electronic device 101 and the orientation of the electronic device 303 are different, the electronic device 101 may determine that image processing is required. For example, when the size information (or the resolution information) (or the aspect ratio information) of the display area of the electronic device 101 and the size information (or the resolution information) (or the aspect ratio information) of the display area of the electronic device 303 are different, the electronic device 101 may determine that image processing is required.

Based on determining that image processing is required in operation 1540, the electronic device 101 may perform operation 1550. Based on determining that image processing is not required in operation 1540, the electronic device 101 may perform operation 1560.

In operation 1550, the electronic device 101 may process the image. In an embodiment, the image processing may include cropping of the image and/or rotation of the image.

For example, the electronic device 101 may crop the image obtained by the camera of the sharer device based on an aspect ratio of the camera requested by the recipient device. When the orientation of the electronic device 101 and the orientation of the electronic device 303 are different, the electronic device 101 may crop the image obtained by the camera of the electronic device 303 based on an inverse aspect ratio of the camera requested by the electronic device 101.

For example, when the orientation of the electronic device 101 and the orientation of the electronic device 303 are different, the electronic device 101 may rotate the cropped image by a rotation amount (e.g., 90 degrees, -90 degrees, or 180 degrees) for the orientation of the electronic device 101 and the orientation of the electronic device 303 to correspond to each other.

In operation 1560, the electronic device 101 may display the image. For example, when the electronic device 101 is the recipient device, the electronic device 101 may display the image.

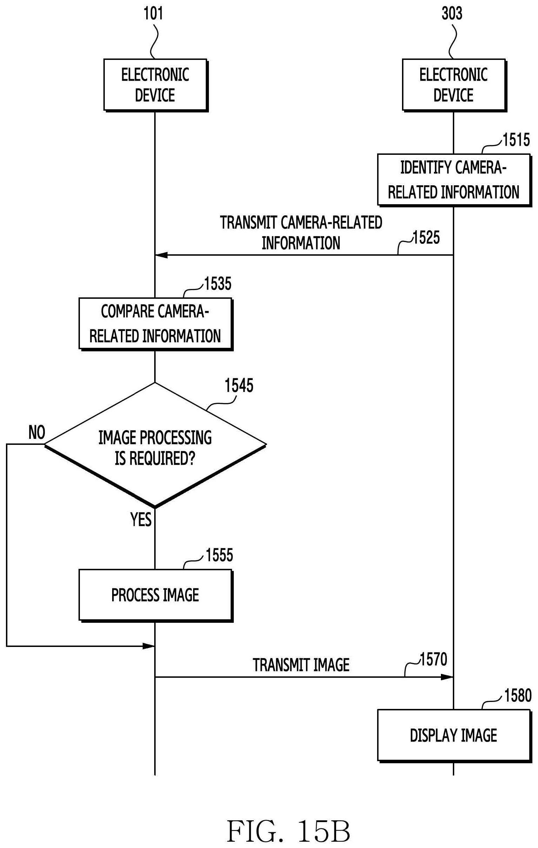

FIG. 15B is a diagram illustrating operations in which an electronic device processes an image according to an embodiment.

In the operations of FIG. 15B, an electronic device 101 may be a sharer device sharing a camera with an electronic device 303, and the electronic device 303 may be a recipient device using the camera of the electronic device 101. Substantially simultaneously with the operations of FIG. 15B, the electronic device 101 may obtain an original image through the camera.

Referring to FIG. 15B, in operation 1515, the electronic device 303 may identify camera-related information. In an embodiment, the camera-related information may include orientation information of the electronic device 303, and/or size information (or resolution information) (or aspect ratio information) of an image captured by a camera of the electronic device 303.

In operation 1525, the electronic device 303 may transmit the camera-related information to the electronic device 101. The electronic device 303 may transmit the camera-related information to the electronic device 101 based on a change in the camera-related information of the electronic device 303.

In operation 1535, the electronic device 101 may compare the camera-related information. In an embodiment, the electronic device 101 may compare an orientation of the electronic device 101 with the orientation of the electronic device 303. In an embodiment, the electronic device 101 may compare size information (or resolution information) (or aspect ratio information) of a display area of the electronic device 101 with size information (or resolution information) (or aspect ratio information) of a display area of the electronic device 303.

In operation 1545, the electronic device 101 may determine whether image processing is required. For example, when the orientation of the electronic device 101 and the orientation of the electronic device 303 are different, the electronic device 101 may determine that image processing is required. For example, when the size information (or the resolution information) (or the aspect ratio information) of the display area of the electronic device 101 and the size information (or the resolution information) (or the aspect ratio information) of the display area of the electronic device 303 are different, the electronic device 101 may determine that image processing is required.

Based on determining that image processing is required in operation 1545, the electronic device 101 may perform operation 1555. Based on determining that image processing is not required in operation 1545, the electronic device 101 may perform operation 1570.

In operation 1555, the electronic device 101 may process the image. In an embodiment, the image processing may include cropping of the image and/or rotation of the image.

For example, the electronic device 101 may crop the image obtained by the camera of the electronic device 101, which is the sharer device, based on an aspect ratio of the camera requested by the electronic device 303, which is the recipient device. When the orientation of the electronic device 101 and the orientation of the electronic device 303 are different, the electronic device 101 may crop the image obtained by the camera of the electronic device 101 based on an inverse aspect ratio of the camera requested by the electronic device 303.

For example, when the orientation of the electronic device 101 and the orientation of the electronic device 303 are different, the electronic device 101 may rotate the cropped image by a rotation amount (e.g., 90 degrees, -90 degrees, or 180 degrees) for the orientation of the electronic device 101 and the orientation of the electronic device 303 to correspond to each other.

In operation 1570, the electronic device 101 may transmit the processed image to the electronic device 303, which is the recipient device.

In operation 1580, the electronic device 303 may display the image.

As described above, an electronic device 101 may comprise communication circuitry 391 for Bluetooth low energy (BLE). The electronic device 101 may comprise at least one processor 120 comprising processing circuitry. The electronic device 101 may comprise memory 130, comprising one or more storage mediums, storing instructions. The instructions, when executed by the at least one processor 120 individually or collectively, may cause the electronic device 101 to receive, via the communication circuitry 391, from another electronic device 303, an advertising packet for sharing a hardware component of the another electronic device 303. The instructions, when executed by the at least one processor 120 individually or collectively, may cause the electronic device 101 to, based on the advertising packet being received while the sharing of the hardware component of the electronic device 101 is activated, activate a driver 919 for access to the hardware component indicated by the advertising packet. The instructions, when executed by the at least one processor 120 individually or collectively, may cause the electronic device 101 to, based on the advertising packet being received while the sharing is deactivated, maintain the driver 919 in a deactivated state.

The instructions, when executed by the at least one processor 120 individually or collectively, may cause the electronic device 101 to, while the driver 919 is activated, identify that the sharing of the hardware component of the another electronic device 303 is deactivated. The instructions, when executed by the at least one processor 120 individually or collectively, may cause the electronic device 101 to, in response to identifying that the sharing of the hardware component of the another electronic device 303 is deactivated, change the driver 919 to the deactivated state.

The instructions, when executed by the at least one processor 120 individually or collectively, may cause the electronic device 101 to, based on the advertising packet being received while the sharing of the hardware component is activated, execute client processes 1015, 1017, and 1019 among the client processes 1015, 1017, and 1019 related to the hardware component and server processes 1155, 1157, and 1159 related to the hardware component.

The instructions, when executed by the at least one processor 120 individually or collectively, may cause the electronic device 101 to obtain, via the communication circuitry 391, from the another electronic device 303, a signal indicating that the server processes 1155, 1157, and 1159 executed in the another electronic device 303 are connected to the client processes 1015, 1017, and 1019. The instructions, when executed by the at least one processor 120 individually or collectively, may cause the electronic device 101 to, based on obtaining the signal, register the hardware component with a device manager 935 related to the hardware component.

The instructions, when executed by the at least one processor 120 individually or collectively, may cause the electronic device 101 to, based on identifying a request from an application 911 for a list of a type of the hardware component, provide a list including identification information of the hardware component to the application 911.

The instructions, when executed by the at least one processor 120 individually or collectively, may cause the electronic device 101 to, based on identifying a control request of the hardware component from an application 911, transmit, via the device manager 935, the control request to the client processes 1015, 1017, and 1019. The instructions, when executed by the at least one processor 120 individually or collectively, may cause the electronic device 101 to cause the client processes 1015, 1017, and 1019 to transmit, via the communication circuitry 391, the control request to the server processes 1155, 1157, and 1159.

The electronic device 101 may comprise another communication circuitry 392 based on another wireless communication scheme different from the BLE. The instructions, when executed by the at least one processor 120 individually or collectively, may cause the electronic device 101 to, while the driver 919 is activated, receive, via the another communication circuitry 392, from the another electronic device 303, data obtained by the hardware component.

The instructions, when executed by the at least one processor 120 individually or collectively, may cause the electronic device 101 to, after the advertising packet is received while the sharing of the hardware component is activated, obtain, via the communication circuitry 391, from the another electronic device 303, capability information related to performance of the hardware component. The instructions, when executed by the at least one processor 120 individually or collectively, may cause the electronic device 101 to, based on the capability information, transmit, via the communication circuitry 391, to the another electronic device 303, setting information for setting the hardware component. The instructions, when executed by the at least one processor 120 individually or collectively, may cause the electronic device 101 to, based on the setting information, receive, via the another communication circuitry 392, the data obtained by the hardware component.

The instructions, when executed by the at least one processor 120 individually or collectively, may cause the electronic device 101 to transmit, via the communication circuitry 391, to the another electronic device 303, reception status information indicating a reception status of the data. The instructions, when executed by the at least one processor 120 individually or collectively, may cause the electronic device 101 to, based on setting information changed based on the reception status information, receive, via the another communication circuitry 392, the data obtained by the hardware component.

The electronic device 101 may include a display. The instructions, when executed by the at least one processor 120 individually or collectively, may cause the electronic device 101 to, based on that a first aspect ratio of an image indicated by the data is different from a second aspect ratio of an area on the display in which the image is displayed in the electronic device 101, display a portion of the image cropped to correspond to the second aspect ratio in the area.

The electronic device 101 may include a display. The instructions, when executed by the at least one processor 120 individually or collectively, may cause the electronic device 101 to, based on that a first orientation of the image indicated by the data is different from a second orientation of the area on the display in which the image is displayed in the electronic device 101, display a portion of the image rotated to correspond to the second orientation in the area.

The instructions, when executed by the at least one processor 120 individually or collectively, may cause the electronic device 101 to, while the sharing of the hardware component of the electronic device 101 is activated, identify a plurality of hardware components of a designated type based on advertising packets of a plurality of electronic devices received via the communication circuitry 391. The instructions, when executed by the at least one processor 120 individually or collectively, may cause the electronic device 101 to, based on an input for selecting the hardware component of the another electronic device 303 among the plurality of hardware components of the designated type, activate the driver 919 for access to the hardware component.

The electronic device 101 may comprise another communication circuitry 392 based on another wireless communication scheme different from the BLE. The instructions, when executed by the at least one processor 120 individually or collectively, may cause the electronic device 101 to, while the driver 919 is activated, transmit, via the another communication circuitry 392, data to be output to the hardware component.

As described above, an electronic device 303 may comprise communication circuitry 393 for Bluetooth low energy (BLE). The electronic device 303 may comprise at least one processor 311 comprising processing circuitry. The electronic device 303 may comprise memory 315, comprising one or more storage mediums, storing instructions. The instructions, when executed by the at least one processor 311 individually or collectively, may cause the electronic device 303 to broadcast, via the communication circuitry 393, to another electronic device 101, an advertising packet for sharing a hardware component of the electronic device 303. The instructions, when executed by the at least one processor 311 individually or collectively, may cause the electronic device 303 to obtain, via the communication circuitry 393, from the another electronic device 101, an access request for the hardware component indicated by the advertising packet. The instructions, when executed by the at least one processor 311 individually or collectively, may cause the electronic device 303 to, based on the access request being obtained, connect server processes 1155, 1157, and 1159 related to the hardware component with client processes 1015, 1017, and 1019 related to the hardware component and executed in the another electronic device 101. The instructions, when executed by the at least one processor 311 individually or collectively, may cause the electronic device 303 to transmit, via the communication circuitry 393, to the another electronic device 101, a signal indicating that the server processes 1155, 1157, and 1159 are connected to the client processes 1015, 1017, and 1019 executed in the another electronic device 101.

The electronic device 303 may comprise another communication circuitry 394 based on another wireless communication scheme different from the BLE. The instructions, when executed by the at least one processor 311 individually or collectively, may cause the electronic device 303 to, while the server processes 1155, 1157, and 1159 are connected to the client processes 1015, 1017, and 1019, transmit, via the another communication circuitry 394, to the another electronic device 101, data obtained by the hardware component.

The instructions, when executed by the at least one processor 311 individually or collectively, may cause the electronic device 303 to transmit, via the communication circuitry 393, to the another electronic device 303, reception status information indicating a reception status of the data. The instructions, when executed by the at least one processor 311 individually or collectively, may cause the electronic device 303 to transmit, via the another communication circuitry 394, the data obtained by the hardware component based on setting information changed based on the reception status information.

The electronic device 303 may comprise another communication circuitry 394 based on another wireless communication scheme different from the BLE. The instructions, when executed by the at least one processor 311 individually or collectively, may cause the electronic device 303 to, while the server processes 1155, 1157, and 1159 are connected to the client processes 1015, 1017, and 1019, receive, via the another communication circuitry 394, data to be output to the hardware component.

As described above, a method may be performed in an electronic device 101 comprising communication circuitry 391 for Bluetooth low energy (BLE). The method may comprise receiving, via the communication circuitry 391, from another electronic device 303, an advertising packet for sharing a hardware component of the another electronic device 303. The method may comprise, based on the advertising packet being received while the sharing of the hardware component of the electronic device 101 is activated, activating a driver 919 for access to the hardware component indicated by the advertising packet. The method may comprise, based on the advertising packet being received while the sharing is deactivated, maintaining the driver 919 in a deactivated state.

The method may comprise, based on the advertising packet being received while the sharing of the hardware component is activated, executing client processes 1015, 1017, and 1019 among the client processes 1015, 1017, and 1019 related to the hardware component and server processes 1155, 1157, and 1159 related to the hardware component.

The method may comprise obtaining, via the communication circuitry 391, from the another electronic device 303, a signal indicating that the server processes 1155, 1157, and 1159 executed in the another electronic device 303 are connected to the client processes 1015, 1017, and 1019. The method may comprise, based on obtaining the signal, registering the hardware component with a device manager 935 related to the hardware component.

As described above, a method may be performed in an electronic device 303 comprising communication circuitry 393 for Bluetooth low energy (BLE). The method may comprise broadcasting, via the communication circuitry 392, to another electronic device 101, an advertising packet for sharing a hardware component of the electronic device 303. The method may comprise obtaining, via the communication circuitry 392, from the another electronic device 101, an access request for the hardware component indicated by the advertising packet. The method may comprise, based on the access request being obtained, connecting server processes 1155, 1157, and 1159 related to the hardware component with client processes 1015, 1017, and 1019 related to the hardware component and executed in the another electronic device 101. The method may comprise transmitting, via the communication circuitry 392, to the another electronic device 101, a signal indicating that the server processes 1155, 1157, and 1159 are connected to the client processes 1015, 1017, and 1019 executed in the another electronic device 101.

As described above, a non-transitory computer readable storage medium may store a program comprising instructions. The instructions, when executed by at least one processor 120 of an electronic device 101 comprising communication circuitry 391 for Bluetooth low energy (BLE), individually or collectively, may cause the electronic device 101 to receive, via the communication circuitry 391, from another electronic device 303, an advertising packet for sharing a hardware component of the another electronic device 303. The instructions, when executed by the at least one processor 120 individually or collectively, may cause the electronic device 101 to, based on the advertising packet being received while the sharing of the hardware component of the electronic device 101 is activated, activate a driver 919 for access to the hardware component indicated by the advertising packet. The instructions, when executed by the at least one processor 120 individually or collectively, may cause the electronic device 101 to, based on the advertising packet being received while the sharing is deactivated, maintain the driver 919 in a deactivated state.

As described above, a non-transitory computer readable storage medium may store a program comprising instructions. The instructions, when executed by at least one processor 311 of an electronic device 303 comprising communication circuitry 393 for Bluetooth low energy (BLE), individually or collectively, may cause the electronic device 303 to broadcast, via the communication circuitry 393, to another electronic device 101, an advertising packet for sharing a hardware component of the electronic device 303. The instructions, when executed by the at least one processor 311 individually or collectively, may cause the electronic device 303 to obtain, via the communication circuitry 393, from the another electronic device 101, an access request for the hardware component indicated by the advertising packet. The instructions, when executed by the at least one processor 311 individually or collectively, may cause the electronic device 303 to, based on the access request being obtained, connect server processes 1155, 1157, and 1159 related to the hardware component with client processes 1015, 1017, and 1019 related to the hardware component and executed in the another electronic device 101. The instructions, when executed by the at least one processor 311 individually or collectively, may cause the electronic device 303 to transmit, via the communication circuitry 393, to the another electronic device 101, a signal indicating that the server processes 1155, 1157, and 1159 are connected to the client processes 1015, 1017, and 1019 executed in the another electronic device 101.

As described above, the electronic device 101 may comprise communication circuitry 391 for wireless communication based on a wireless communication scheme, at least one processor 120 comprising processing circuitry, and memory 130, comprising one or more storage mediums, storing instructions. The instructions, when executed by the at least one processor 120 individually or collectively, may cause the electronic device 101 to receive, via the communication circuitry 391, from another electronic device 303, an advertising packet including information of a hardware component of the another electronic device 303. The instructions, when executed by the at least one processor 120 individually or collectively, may cause the electronic device 101 to, based at least in part on the information included in the advertising packet, change a program 919 indicating information accessible to the hardware component indicated by the advertising packet from a deactivated state to an activated state.

The instructions, when executed by the at least one processor 120 individually or collectively, may cause the electronic device 101 to, while the program 919 is activated, based on other information indicating that sharing of the hardware component of the another electronic device 303 is deactivated, change the program 919 from the activated state to the deactivated state.

The instructions, when executed by the at least one processor 120 individually or collectively, may cause the electronic device 101 to, based on identifying a request from an application 911 for a list of a type of the hardware component, provide a list including identification information of the hardware component to the application 911.

The instructions, when executed by the at least one processor 120 individually or collectively, may cause the electronic device 101 to, based on identifying a control request of the hardware component from an application 911, transmit, via the communication circuitry 391, to the another electronic device 303, the control request using the program 919.

As described above, the electronic device 101 may comprise another communication circuitry 392 based on another wireless communication scheme different from the wireless communication scheme. The instructions, when executed by the at least one processor 120 individually or collectively, may cause the electronic device 101 to, while the program 919 is activated, receive, via the another communication circuitry 392, from the another electronic device 303, data obtained by the hardware component.

The instructions, when executed by the at least one processor 120 individually or collectively, may cause the electronic device 101 to, while the program 919 is activated, identify a request for the data from an application 911. The instructions, when executed by the at least one processor 120 individually or collectively, may cause the electronic device 101 to, based on identifying the request, establish, via the another communication circuitry 392, a wireless connection with the another electronic device 303.

The instructions, when executed by the at least one processor 120 individually or collectively, may cause the electronic device 101 to obtain, via the communication circuitry 391, from the another electronic device 303, capability information related to performance of the hardware component. The instructions, when executed by the at least one processor 120 individually or collectively, may cause the electronic device 101 to, based on the capability information, transmit, via the communication circuitry 391, to the another electronic device 303, setting information for setting the hardware component. The instructions, when executed by the at least one processor 120 individually or collectively, may cause the electronic device 101 to, based on the setting information, receive, via the another communication circuitry 392, the data obtained by the hardware component.

The instructions, when executed by the at least one processor 120 individually or collectively, may cause the electronic device 101 to transmit, via the communication circuitry 391, to the another electronic device 303, reception status information indicating a reception status of the data. The instructions, when executed by the at least one processor 120 individually or collectively, may cause the electronic device 101 to, based on setting information changed based on the reception status information, receive, via the another communication circuitry 392, the data obtained by the hardware component.

The instructions, when executed by the at least one processor 120 individually or collectively, may cause the electronic device 101 to, while the sharing of the hardware component of the electronic device 101 is activated, identify a plurality of hardware components of a designated type based on advertising packets of a plurality of electronic devices received via the communication circuitry 391. The instructions, when executed by the at least one processor 120 individually or collectively, may cause the electronic device 101 to, based on an input for selecting the hardware component of the another electronic device 303 among the plurality of hardware components of the designated type, activate the program 919.

As described above, the electronic device 101 may comprise a display. The instructions, when executed by the at least one processor 120 individually or collectively, may cause the electronic device 101 to identify, in a user interface (UI) displayed on the display, a user input for a visual object for activating or deactivating the sharing of the hardware component. The instructions, when executed by the at least one processor 120 individually or collectively, may cause the electronic device 101 to, based on the user input, receive, via the communication circuitry 391, the advertising packets of the plurality of electronic devices while the sharing of the hardware component is activated. The instructions, when executed by the at least one processor 120 individually or collectively, may cause the electronic device 101 to display, on the display, another UI including a list 541 of the plurality of electronic devices identified based on the advertising packets. The instructions, when executed by the at least one processor 120 individually or collectively, may cause the electronic device 101 to identify the input selecting the another electronic device 303 among the plurality of electronic devices included in the list 541.

As described above, an electronic device 101 may comprise first communication circuitry 391 for first wireless communication based on a first wireless communication scheme, second communication circuitry 392 for second wireless communication based on a second wireless communication scheme different from the first wireless communication scheme, a display, at least one processor 120 comprising processing circuitry, and memory 130, comprising one or more storage mediums, storing instructions. The instructions, when executed by the at least one processor 120 individually or collectively, may cause the electronic device 101 to, while sharing of a camera of another electronic device 303 is activated, obtain, via the first communication circuitry 391, from the another electronic device 303, first information related to the camera. The instructions, when executed by the at least one processor 120 individually or collectively, may cause the electronic device 101 to obtain second information related to the display on which an image obtained by the camera is displayed. The instructions, when executed by the at least one processor 120 individually or collectively, may cause the electronic device 101 to, based on that the first information and the second information correspond to each other, display the image obtained via the second communication circuitry 392 from the another electronic device 303 in an area of the display. The instructions, when executed by the at least one processor 120 individually or collectively, may cause the electronic device 101 to, based on that the first information and the second information are different from each other, display the image image-processed to correspond to the second information in the area.

The instructions, when executed by the at least one processor 120 individually or collectively, may cause the electronic device 101 to, based on that a first orientation of the image indicated by the first information is different from a second orientation of the area on the display indicated by the second information, display the image rotated to correspond to the second orientation in the area.

The instructions, when executed by the at least one processor 120 individually or collectively, may cause the electronic device 101 to, based on that a first orientation of the image indicated by the first information is different from a second orientation of the area on the display indicated by the second information, display the image rotated to correspond to the second orientation in the area.

As described above, an electronic device 303 may comprise communication circuitry 393 for wireless communication based on a wireless communication scheme, at least one processor 311 comprising processing circuitry, and memory 315, comprising one or more storage mediums, storing instructions. The instructions, when executed by the at least one processor 311 individually or collectively, may cause the electronic device 303 to broadcast, via the communication circuitry 393, to another electronic device 101, an advertising packet including information of a hardware component of the electronic device 303. The instructions, when executed by the at least one processor 311 individually or collectively, may cause the electronic device 303 to obtain, via the communication circuitry 393, from the another electronic device 101, an access request for the hardware component indicated by the advertising packet. The instructions, when executed by the at least one processor 311 individually or collectively, may cause the electronic device 303 to, based on the access request being obtained, connect to a program 919 executed in the electronic device 101 and related to the hardware component, the program 919 indicating information accessible to the hardware component.

As described above, the electronic device 303 may comprise another communication circuitry 394 based on another wireless communication scheme different from the wireless communication scheme. The instructions, when executed by the at least one processor 311 individually or collectively, may cause the electronic device 303 to, while connected to the program 919, transmit, via the another communication circuitry 394, to the another electronic device 101, data obtained by the hardware component.

The instructions, when executed by the at least one processor 311 individually or collectively, may cause the electronic device 303 to transmit, via the communication circuitry 393, to the another electronic device 303, reception status information indicating a reception status of the data. The instructions, when executed by the at least one processor 311 individually or collectively, may cause the electronic device 303 to transmit, via the another communication circuitry 394, the data obtained by the hardware component based on setting information changed based on the reception status information.

As described above, the electronic device 303 may comprise another communication circuitry 394 based on another wireless communication scheme different from the wireless communication scheme. The instructions, when executed by the at least one processor 311 individually or collectively, may cause the electronic device 303 to, while connected to the program 919, receive, via the another communication circuitry 394, data to be output to the hardware component.

In a method performed in an electronic device 101 comprising communication circuitry 391 for wireless communication based on a wireless communication scheme, the method may comprise receiving, via the communication circuitry 391, from another electronic device 303, an advertising packet including information of a hardware component of the another electronic device 303. The method may comprise, based at least in part on the information included in the advertising packet, changing a program 919 indicating information accessible to the hardware component indicated by the advertising packet from a deactivated state to an activated state.

The method may comprise, while the program 919 is activated, based on other information indicating that sharing of the hardware component of the another electronic device 303 is deactivated, changing the program 919 from the activated state to the deactivated state.

The method may comprise, based on identifying a request from an application 911 for a list of a type of the hardware component, providing a list including identification information of the hardware component to the application 911.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
communication circuitry (391) for wireless communication based on a wireless communication scheme;
at least one processor (120) comprising processing circuitry; and
memory (130), comprising one or more storage mediums, storing instructions,
wherein the instructions, when executed by the at least one processor (120) individually or collectively, cause the electronic device (101) to:
receive, via the communication circuitry (391), from another electronic device (303), an advertising packet including information of a hardware component of the another electronic device (303), and
based at least in part on the information included in the advertising packet, change a program (919) indicating information accessible to the hardware component indicated by the advertising packet from a deactivated state to an activated state.

2. The electronic device (101) of claim 1,
wherein the instructions, when executed by the at least one processor (120) individually or collectively, cause the electronic device (101) to:
while the program (919) is activated, based on other information indicating that sharing of the hardware component of the another electronic device (303) is deactivated, change the program (919) from the activated state to the deactivated state.

3. The electronic device (101) of any one of claim 1 or claim 2,
wherein the instructions, when executed by the at least one processor (120) individually or collectively, cause the electronic device (101) to:
based on identifying a request from an application (911) for a list of a type of the hardware component, provide a list including identification information of the hardware component to the application.

4. The electronic device (101) of any one of claims 1 to 3,
wherein the instructions, when executed by the at least one processor (120) individually or collectively, cause the electronic device (101) to:
based on identifying a control request of the hardware component from an application, transmit, via the communication circuitry (391), to the another electronic device (303), the control request using the program (919).

5. The electronic device (101) of any one of claims 1 to 4, comprising another communication circuitry (392) based on another wireless communication scheme different from the wireless communication scheme,
wherein the instructions, when executed by the at least one processor (120) individually or collectively, cause the electronic device (101) to:
while the program (919) is activated, receive, via the another communication circuitry (392), from the another electronic device (303), data obtained by the hardware component.

6. The electronic device (101) of claim 5,
wherein the instructions, when executed by the at least one processor (120) individually or collectively, cause the electronic device (101) to:
while the program (919) is activated, identify a request for the data from an application; and
based on identifying the request, establish, via the another communication circuitry (392), a wireless connection with the another electronic device (303).

7. The electronic device (101) of claim 5,
wherein the instructions, when executed by the at least one processor (120) individually or collectively, cause the electronic device (101) to:
obtain, via the communication circuitry (391), from the another electronic device (303), capability information related to performance of the hardware component,
based on the capability information, transmit, via the communication circuitry (391), to the another electronic device (303), setting information for setting the hardware component, and
based on the setting information, receive, via the another communication circuitry (392), from the another electronic device (303), the data obtained by the hardware component.

8. The electronic device (101) of claim 7,
wherein the instructions, when executed by the at least one processor (120) individually or collectively, cause the electronic device (101) to:
transmit, via the communication circuitry (391), to the another electronic device (303), reception status information indicating a reception status of the data,
based on setting information changed based on the reception status information, receive, via the another communication circuitry (392), from the another electronic device (303), the data obtained by the hardware component.

9. The electronic device (101) of any one of claims 1 to 8,
wherein the instructions, when executed by the at least one processor (120) individually or collectively, cause the electronic device (101) to:
while the sharing of the hardware component of the electronic device (101) is activated, based on advertising packets of a plurality of electronic device (101)s received via the communication circuitry (391), identify a plurality of hardware components of a designated type, and
based on an input for selecting the hardware component of the another electronic device (303) among the plurality of hardware components of the designated type, activate the program (919).

10. The electronic device (101) of claim 9, comprising a display,
wherein the instructions, when executed by the at least one processor (120) individually or collectively, cause the electronic device (101) to:
identify, via a user interface (UI) displayed on the display, a user input for a visual object for activating or deactivating the sharing of the hardware component,
based on the user input, receive, via the communication circuitry (391), the advertising packets of the plurality of electronic device (101)s while the sharing of the hardware component is activated,
display, on the display, another UI including a list (541) of the plurality of electronic device (101)s identified based on the advertising packets, and
identify the input selecting the another electronic device (303) among the plurality of electronic device (101)s included in the list (541).

11. An electronic device (101), comprising:
first communication circuitry (391) for first wireless communication based on a first wireless communication scheme,
second communication circuitry (392) for second wireless communication based on a second wireless communication scheme different from the first wireless communication scheme,
a display,
at least one processor (120) comprising processing circuitry; and
memory, comprising one or more storage mediums, storing instructions,
wherein the instructions, when executed by the at least one processor (120) individually or collectively, cause the electronic device (101) to:
while sharing of a camera of another electronic device (303) is activated, obtain, via the first communication circuitry (391), from the another electronic device (303), first information related to the camera,
obtain second information related to the display on which an image obtained by the camera is displayed,
based on that the first information and the second information correspond to each other, display the image obtained via the second communication circuitry (392) from the another electronic device (303) in an area of the display,
based on that the first information and the second information are different from each other, display the image image-processed to correspond to the second information in the area.

12. The electronic device (101) of claim 11,
wherein the instructions, when executed by the at least one processor (120) individually or collectively, cause the electronic device (101) to:
based on that a first orientation of the image indicated by the first information is different from a second orientation of the area on the display indicated by the second information, display the image rotated to correspond to the second orientation in the area.

13. The electronic device (101) of any one of claim 11 or 12,
wherein the instructions, when executed by the at least one processor (120) individually or collectively, cause the electronic device to:
based on that a first aspect ratio of the image indicated by the first information is different from a second aspect ratio of the area on the display indicated by the second information, display the image cropped to correspond to the second orientation in the area.

14. An electronic device (303), comprising:
communication circuitry (393) for wireless communication based on a wireless communication scheme;
at least one processor (311) comprising processing circuitry; and
memory (315), comprising one or more storage mediums, storing instructions,
wherein the instructions, when executed by the at least one processor (311) individually or collectively, cause the electronic device (303) to:
broadcast, via the communication circuitry (393), an advertising packet including information of a hardware component of the electronic device (303),
obtain, via the communication circuitry (393), from another electronic device (101), an access request for the hardware component indicated by the advertising packet,
based on the access request being obtained, connect the hardware program (919) with a program (919), which is executed by the another electronic device (101), and related to the hardware component, the program (919) indicating information accessible to the hardware component.

15. The electronic device (303) of claim 14, comprising:
another communication circuitry (394) based on another wireless communication scheme different from the wireless communication scheme,
wherein the instructions, when executed by the at least one processor (311) individually or collectively, cause the electronic device (303) to:
while connected to the program (919), transmit, via the another communication circuitry (394), to the another electronic device (101), data obtained by the hardware component.
